# EUROPEAN PATENT APPLICATION

(11) **EP 2 907 759 A1**
(43) Date of publication of application: **19.08.2015**
(21) Application number: 14154926.1
(22) Date of filing: 12.02.2014
(51) Int. Cl.: B65B 31/02, B65B 61/18, B65D 77/20, B65B 7/16

(54) **Package for a product and apparatus and process for packaging a product**

(71) Applicant: Cryovac, Inc., Duncan, SC 29334-0464 (US)
(72) Inventor: Ciocca, Maurizio, 28100 Novara (IT); Rizzi, Jvanohe, 20025 Legnano (MI) (IT); Palumbo, Riccardo, 28041 Arona (NO) (IT)
(74) Representative: Sutto, Luca

(57) **Abstract**

A packaging assembly, a packaging apparatus, and a process for packaging are disclosed which are configured to obtain a package where a tray (4) hosting the product (P) receives a plastic film sheet (18), comprising heat sealable material; the film sheet (18) is heat bonded to the tray top rim (4c) by at least by a seal (90) circumferentially extending between the peripheral portion (18b) and the top rim (4c) of the tray (4); at least one portion of the film sheet corner flap (93), overlapping the top rim (4c) of the tray (4) is not heat sealed to the same top rim.

## Description

### Technical field

The present invention relates to an apparatus and to a process for packaging a product. In accordance with certain aspects, the invention relates to a packaging assembly of a packaging apparatus configured to improve positioning and sealing of a corner region of a film in skin packaging and in tray lidding. In accordance with other aspects, the invention relates to an apparatus and process for skin packaging of a product and for tray lidding. In accordance with other aspects, the invention relates to an apparatus and process for packaging a product under a controlled atmosphere or under vacuum.

### Background art

Containers are commonly used for the packaging of food and for a wide variety of other items wherein a lid is bonded to the container e.g. by the application of heat. The containers and lids can be made of a number of materials, for example plastic, metal, or combinations thereof, whereas the lid is typically supplied in form of a continuous film and subsequently cut into a suitable shape either before or after bonding. In some examples, a plastic lid is pre-cut into a suitable shape and subsequently heat bonded onto a plastic tray.

One method of bonding the lid to the tray involves use of a laminated plastic lid having a layer of metal foil. A power supply provides an electrical current to a nearby induction coil, which induces an electrical current into the metal foil to develop heat, which melts portions of the lid and container, and fuses the lid to the container lip. For example, EP0469296 discloses an induction sealing assembly using a single turn coil to seal a plastic lid onto a plastic container. The assembly includes a nest having a recess for holding a container to be sealed, and a movable sealing head for holding a lid or foil membrane and for positioning the lid relative to an opening in the container. Means are provided to secure a portion of the sealing head against a portion of the nest to form an airtight chamber between a lower portion of the sealing head and an upper portion of the nest. The induction sealing assembly uses a vacuum source and a source of inert gas to flush air from the container prior to sealing. An induction coil mounted in the sealing head seals the lid to the container by heating some portions of the lid in contact with the container. This solution uses a precut lid, so that means for transporting and loading the lid into a proper position for sealing are required, compromising the efficiency of the packaging process. Moreover, EP0469296 generally suggests using a roll stock foil membrane to seal the container while being silent regarding the specific manner as to how the membrane should be cut from the roll in order to form an accurately fitting tray lid.

In order to package products, in particular food products, vacuum packaging has been developed and refined in the past. Among known vacuum packaging processes, vacuum skin packaging is commonly employed for packaging food products such as fresh and frozen meat and fish, cheese, processed meat, ready-to-eat meals and the like. Vacuum skin packaging is described, for example, in FR 1258357, FR 1286018, AU 3491504, US RE 30009, US 3574642, US 3681092, US 3713849, US 4055672, and US 5346735.

Vacuum skin packaging is basically a thermoforming process. In particular, the product is typically placed on a rigid or semi-rigid support (such as a tray, a bowl, or a cup). The support with the product placed thereon is put in a vacuum chamber, where a film of thermoplastic material, held by a local vacuum in a position above the product placed on the support, is heated to make it more yielding. The space between the support and the film is evacuated. The film is then sealed at the perimeter of the tray to fix its position relative to the tray and the local vacuum above the film is shut off, releasing the film. When the vacuum inside the chamber is decreased, the vacuum inside the tray causes the film to drape down all around the product and seal to the surface of the support not covered by the product, thus forming a tight skin around the product and on the support.

US 2007/0022717 discloses a machine for gas tight packaging an object using a film material. The machine has a lower tool for supporting two trays and an upper tool having cutting devices housed inside the upper tool and facing the lower tool. A film is interposed between the upper tool and the lower tool. The upper and lower tools are first closed the one against the other and then the film is cut to the size of the peripheral rims of the trays by the cutting devices operative inside the upper tool. Sealing tools heat-seal the cut regions of the film to the peripheral rim of the tray. A vacuum is situated in the surrounding region of the tray to cause deep drawing of the film. In the document it is also mentioned that the same device can be used for sealing trays with films that are not deep drawn to form a skin over the product.

US 2005/0257501 discloses a machine for packaging a product arranged in a tray. The machine has a lower tool for supporting the tray and an upper tool with a cutting device. During operation, the film is clamped along an edge surrounding the tray and is deformed by the upper tool in a direction extending away from the product. The space surrounding the product is then evacuated, the film and the edge of the tray are sealed, and the film is subsequently cut by the cutting device.

As to the machines disclosed in US 2007/0022717 and US 2005/0257501, the film is cut to the size of the tray within the chamber formed by the upper tool and the lower tool, by means of the cutting devices provided on the upper tool. First of all, this disadvantageously requires providing a rather complex and bulky upper tool. Further, this disadvantageously requires providing an excess film with respect to the size of the support, the excess film having to be cut from the package and to be disposed of during the packaging process or at the end thereof. Indeed, the film is in the form of a continuous sheet wound on a roll (as shown e.g. in FIG. 3 of US 2005/0257501). Therefore, excess film material is required to allow the film to be pulled from the roll and to be held in place above the supported product. Further, in US 2007/0022717 more than one product loaded support (namely two) is packaged at each cycle, so that an excess film is also present between adjacent supports.

WO2011/012652 shows an apparatus for packaging a product in a tray. The machine comprises a first film transfer plate configured for holding a film sheet, heating the film sheet, bringing the film sheet to a position above a tray with the product arranged thereon, and fixing the film sheet to the tray in an air tight manner. A second film transfer plate is also present. As for the first film transfer plate also the second film transfer plate is configured for holding a film sheet, heating the film sheet, bringing the film sheet to a position above a tray with the product arranged thereon, and fixing the film sheet to the tray in an air tight manner. During a first operating step of the machine, the first film transfer plate holds a first film sheet and heats the first film sheet, while the second film transfer plate releases a second film sheet thereby allowing the second sheet to be drawn into a first tray; and during a second operating step of the machine, the second film transfer plate holds a third film sheet and heats the third film sheet, while the first film transfer plate releases the first film sheet thereby allowing the first film sheet to be drawn into a second tray. The machine further comprises a rotating cylinder suitable for rotating about its axis X, the first film transfer plate and the second film transfer plate being connected to the rotating cylinder so that, when the rotating cylinder rotates about its axis X, the positions of the first film transfer plate and the second film transfer plate are exchanged. A vacuum arrangement allows removing air from within the tray underneath the film sheet (positioned either by the first or by the second film transfer plate) through the at least one hole present in the tray. The film transfer plates are configured to release the film sheet thereby allowing the film sheet to be drawn into the tray while the vacuum arrangement is removing air from within the tray.

US 2012/0204516 shows a machine for vacuum skin packaging a product arranged on a support. The support has a sidewall with at least one hole. The machine comprises a first film transfer plate configured for holding a film sheet, heating the film sheet, bringing the film sheet to a position above the support with the product arranged thereon and air tightly fixing the film sheet to the support. The machine also comprises a vacuum arrangement for removing air from within the support underneath the film sheet through the at least one hole. The first film transfer plate is configured to release the film sheet thereby allowing the film sheet to be drawn into the support while the vacuum arrangement is removing air from within the support. In this machine, the film is supplied by a vertically arranged cutting assembly, which provides pre-cut single sheets of film to be picked up by one of the transfer plates. In detail, a respective film sheet is cut and held in a vertical position, where a first transfer plate can pick up the film sheet. Then, the position of the first transfer plate and a second transfer plate is switched (in this particular case by a rotatory movement of a transfer plate assembly carrying both transfer plates), while another film sheet is cut and supplied as the previous one. While the second transfer plate picks up the newly supplied film sheet, the first transfer plate positions the film on a tray for sealing.

In general, film sheets can be cut outside or inside the packaging assembly. The film sheets provided by the cutting assembly can, for example, be picked up directly by a transfer plate or a sealing head. In some examples, the sealing head (or transfer plate) is moved with respect to an output region of the cutting assembly and picks up one or more film sheets (see, e.g., US 2012/0204516 as described above). Subsequently, the sealing head returns to its original position (e.g. above or near a tray) for positioning and sealing of the film with respect to the tray. Whenever the film is not directly picked up by a sealing head or transfer plate, the film sheets are transported by some suitable transport means in order to be supplied at a position at which the sealing head (or transfer plate) can access the film sheet for positioning and sealing. The transporting means can include any means suitable for achieving the transport of the film, including but not limited to: electric, hydraulic, using vacuum, using pincers, etc. In some other examples, additionally or alternatively the cutting assembly can be integrated into another component of the packaging machine. For example, the cutting means can be associated to relatively moving tools effecting the positioning and/or sealing of the film to the tray, such that substantially at the same time as the sealing of a package takes place, the cutting of a film sheet destined for sealing a subsequent package can take place. In such examples, the cutting means can be activated by a mechanical movement of the sealing head with respect to the tray.

As can be seen from the description above, the use of pre-cut film provides an improvement over known methods and apparatus for packaging products, which rely on excess film being cut from packaged products, after packaging and sealing thereof. If the dimensions of the film - in particular the width thereof - and those of the trays are carefully adapted to one another, packaging of products using tray lidding and skin packaging can be realized effectively without excess film material having to be cut from the packaged products. This leads to substantial advantages with respect to the minimization of material consumption.

However, as shown in some examples above, excess film material can be utilized in terms of positioning the film so that requirements with respect to the accuracy of positioning the film can be much less strict. Further, in terms of handling the film, having excess portions around the packaged product allows for easy handling of the film by the excess portions being acted upon by the packaging apparatus. For example, excess portions of the film can be clamped in order to pull the film into position. In other examples, the amount of material in the excess portions can provide stiffness to the excess portion preventing unwanted folding or other deformations and/or movements that can be detrimental to the packaging process and/or that could lead to imperfections in the packaging (e.g. compromised seal or uneven appearance).

Consequently, minimizing or eliminating the amount of excess material necessary for the packaging process can lead to one or more of the following detrimental effects.

In tray lidding, a pre-cut lid is positioned on a film holder above a tray to be sealed so that the pre-cut film extends beyond the film holder. This facilitates a sealing tool to act upon the portions of the film extending beyond the film holder in order to seal the film to the tray. However, the portions of the pre-cut film extending beyond the film holder, in particular the corner portions of the film, are prone to deformation due to a number of packaging process related factors: heat emitted from the sealing tool or other components, turbulence of gas or air created upon evacuation and/or upon creation of the inert atmosphere, mechanical movement of components of the packaging tool, mechanical resistance and/or rigidity of the material at certain process related temperatures, etcetera.

In skin packaging, portions of pre-cut film extending beyond the sealing tool typically extend from the corners of the tool, in particular, when the pre-cut film has a rectangular outline and pointy corners, while the tray has a curved outline and curved corners. Here, too, the film can deform and impact the quality of the seal and packaging. In skin packaging, in particular, deformation of the corner portions of the film can occur due to comparably thin films being used.

When such deformation occurs, the quality of the seal can be compromised, possibly leading to a seal of mediocre quality or a defective seal.

Additionally, when using pre-cut film sheets cut to match the size of the top rim of the tray, the size of the free flaps of film material located in the corner regions of the tray is very limited, thus leaving users a small gripping surface when trying to peel the film from the tray and open the package.

Therefore, it is an object of the invention conceiving a process and an apparatus, which can efficiently and accurately position and seal a film in tray lidding or skin packaging. In particular, it is an object of the invention to efficiently and accurately position and seal corner portions of the film.

A further object of the invention is to provide a packaging process and apparatus that facilitate efficient and accurate positioning and welding of a film and/or corner portions thereof to the tray in order to prevent or limit uncontrolled deformation and particularly curling of the material of the film.

Furthermore, it is an ancillary object of the invention providing a packaging process and apparatus that allows preparation of a packaged product with minimized waste of material, while offering an easy peelable film.

Additionally, it is an object of the invention a packaging, obtainable with the apparatus and/or process of the invention, which can be manufactured in an accurate manner and which may offer the final user an easy peelable film.

### Summary of the invention

One or more of the objects specified above are substantially achieved by a package, by a process and by an apparatus according to any one of the appended claims.

Aspects of the invention are disclosed below.

A first aspect concerns a package hosting a product (P); the package comprises:
a tray (4) hosting the product (P), the tray (4) having a base wall (4a), a side wall (4b) emerging from the base wall (4a), and a top rim (4c) radially emerging from the side wall (4b), the top rim (4c) delimiting a mouth of the tray (4) and outwardly terminating at a peripheral rim edge (4d), the tray (4) having at least one tray corner region (4e); and
a plastic film sheet (18), comprising heat sealable material, having a peripheral portion (18b) and a peripheral border (18d), the film sheet (18) being heat bonded to the tray top rim (4c) at least by a seal (90) circumferentially extending between the peripheral portion (18b) and the top rim (4c) of the tray (4), thereby sealing an inside of the package from an outside thereof, the seal (90) having an outward edge (91).

In a 2^{nd} aspect according to the 1^{st} aspect, in correspondence of the at least one tray corner region (4e), the outward edge (91) of the seal (90) forms at least one welding line (92) having shape different from the shape of the peripheral rim edge (4d) at the same corner region (4e).

In a 3^{rd} aspect according to the preceding aspect, the welding line or lines (92) delimit - in cooperation with the peripheral portion (18b) of the film sheet (18) - at least one portion of a film sheet corner flap (93), said at least one portion of the corner flap (93) overlapping said top rim (4c) and not being heat sealed to the same top rim. In other words, although the film sheet 818) has a surface layer facing the top rim (4c) which is made or comprises heat sealable material, said at least one portion of the corner flam remain detached from the top surface of the top rim of the tray.

In a 4^{th} aspect according to any one of the preceding aspects, said seal (90) comprises plastic material of the film peripheral portion (18b) and/or of the tray top rim (4c). In other words the sea is formed by the material of one or both the film sheet and the top rim which is brought to a temperature of softening or melting such that the material of one part intermingles with the material of the other thereby creating a bonding layer forming the seal.

In a 5^{th} aspect according to any one of the preceding aspects, the at least one welding line (92) is configured and positioned such as to stiffen and/or keep flat said film flap (93).

In a 6^{th} aspect according to any one of the preceding 4 aspects, at least one welding line (92) has a concavity facing the corner flap (93) and defines at least two wedge shaped portions (94) of the seal each wedge shaped portion having a vertex of an angle of less than 135°.

In a 7^{th} aspect according to any one of the preceding aspects from 1^{st} to 5^{th} wherein said at least one welding line (92) has a concavity facing away from the corner flap (93) and defines at least one wedge shaped portion (94) of the seal (90) having a vertex of an angle of more than 135°.

In a 8^{th} aspect according to any one of the preceding aspects, the at least one welding line (92) is a polygonal line formed by a plurality of welding lines or a curvilinear welding line or a single straight welding line.

In a 9^{th} aspect according to any one of the preceding 3 aspects, the at least one welding line (92) is a polygonal, formed by at least two welding lines, and has concavity facing the corner flap (93), with the two wedge shaped portions (94) pointing towards opposite sides of the corner flap and symmetrically positioned with respect to a line bisecting a tip angle (α) of the corner flap.

In a 10^{th} aspect according to any one of the preceding aspects from 6^{th} to 8^{th}, the at least one welding line (92) is a polygonal, formed by at least two welding lines, with concavity facing away from the corner flap (93) and with one wedge shaped portion (94) pointing towards the center of the corner flap and symmetrically positioned with respect to a line bisecting a tip angle (α) of the corner flap.

In a 11^{th} aspect according to any one of the preceding aspects from 6^{th} to 8^{th} the at least one welding line (92) is a curvilinear welding line with concavity facing the corner flap (93) with the two wedge shaped portions (94) pointing towards opposite sides of the corner flap and symmetrically positioned with respect to a line bisecting a tip angle (α) of the corner flap.

In a 12^{th} aspect according to any one of the preceding aspects, the seal (90) has a first width (W1) along a majority of the peripheral portion (18b) of the film sheet (18) and a second width (W2) in correspondence of the at least one tray corner region (4e), the second width being less than the first width.

In a 13^{th} aspect according to any one of the preceding aspects, the peripheral border (18d) of the film sheet (18) radially protrudes outside the peripheral rim edge (4d) of the tray (4), such that, in correspondence of the at least one tray corner region (4e), the corner flap (93) which is not connected to the top rim (4c) presents a first flap portion (93') extending outside the peripheral rim edge (4d) of the at least one tray (4) and a second flap portion (93") extending inside the peripheral rim edge (4d) of the at least one tray (4) and overlapping said top rim (4c) of the at least one tray (4).

In a 14^{th} aspect according to any one of the preceding aspects, the tray is rectangular.

In a 15^{th} aspect according to any one of the preceding 3 aspects, the first width (W1) of the seal (90) is substantially constant along the parallel straight sides of the tray, and the second width (W2) is substantially variable along the tray corner region (4e).

In a 16^{th} aspect according to any one of the preceding 4 aspects, a minimum of the second width (W2) is less than 50% of the first width.

In a 17^{th} aspect according to any one of the preceding 4 aspects a size of the second flap portion (93e") is at least 50% the size of the first flap portion. By size it is meant the surface area of the top surface of the corner flap portions.

In a 18^{th} aspect according to any one of the preceding aspect the size of the second flap portion is equal to or greater than a size of the first flap portion (93e'), optionally wherein the size of the second flap portion (93e") is at least 200% of the size of the first flap portion (93e'), further optionally wherein the size of the second flap portion (93e") is at least 300% of the size of the first flap portion (93e').

In a 19^{th} aspect according to any on of the preceding aspects the seal comprises, in correspondence of the at least one tray corner region (4e), an auxiliary seal section exhibiting no direct connection to the rest of seal.

In a 20^{th} aspect according to the preceding aspect, wherein the auxiliary seal section is configured to seal at least part of the corner flap, in particular part of the second corner flap portion (93e") of the corner flap, to the top rim (4c) of the tray (4).

In a 21^{st} aspect according to any one of the preceding aspects wherein the seal comprises, in correspondence of the at least one tray corner region (4e), an auxiliary seal section having the shape of a narrow strip (having width smaller than the average width of the corner flap measured in correspondence of the middle of the strip) than the extending transversally to the rest of the seal (90), wherein the auxiliary seal section is configured to seal a central portion of the corner flap, in particular of the second corner flap portion (93e") of the corner flap (93), to the top rim (4c) of the tray (4).

In a 22^{nd} aspect according to any one of the preceding aspects, the corner flap and/or the at least one tray corner region (4e) is/are substantially symmetrical with respect to an axis bisecting the corner angle (α) of the film sheet.

In a 23^{rd} aspect according to any one of the preceding aspects, the seal (90) has a substantially constant width except for one or more non-constant width sections of the seal in correspondence of the at least one tray corner region (4e).

In a 24^{th} aspect according to any one of the preceding aspects, the seal (90) comprises a continuous layer and extends substantially within a single plane.

In a 25^{th} aspect according to any one of the preceding aspects, the film (18) is a discrete film sheet which has a size sufficient to cover the mouth of the tray (4) and to engage the top rim (4c) of the tray (4) in correspondence of an entire perimeter of the tray (4).

In a 26^{th} aspect according to any one of the preceding aspects, the film sheet (18) does not extend beyond the peripheral rim edge (4d) of the tray (4) except for a portion of the film in correspondence of the tray corner region (4e) when the film sheet (18) is placed substantially in superimposition with the tray (4).

In a 27^{th} aspect according to any one of the preceding aspects, the package is a vacuum skin package wherein the film sheet (18) is at least heat bonded to an inner side of a side wall (4b) of the tray (4).

In 28^{th} aspect according to the preceding aspect the film sheet is also heat bonded to an inner side of a bottom wall (4a) of the tray (4) not interested by the product (P).

A 29^{th} aspect concerns a packaging assembly (8) for a packaging apparatus, comprising:
a lower tool (22) having at least one seat configured for receiving at least one tray (4) configured for hosting a product (P), the at least one tray (4) having a base wall (4a), a side wall (4b) emerging from the base wall (4a),
and a top rim (4c) radially emerging from the side wall (4b), the top rim (4c) delimiting a mouth of the tray (4) and
outwardly terminating at a peripheral rim edge (4d), the at least one tray (4) further having at least a tray corner region (4e);
an upper tool (21) configured to cooperate with the lower tool (22) to define a packaging chamber (24), the upper tool (21) being further configured for holding at least a portion of a plastic film sheet (18) having a peripheral border (18d),
wherein the upper tool (21) comprises a sealing head (40) having an active surface (41) radially delimited, at a radially external periphery thereof, by a head peripheral edge (41 a), the active surface (41) being configured for facing the top rim (4c) of the at least one tray (4) and for heat sealing the film sheet (18) to the top rim (4c) of the tray (4);
wherein at least one of the upper and lower tools (21; 22) is configured to be movable with respect to the other at least between a first operating condition, where the upper and lower tools (21, 22) allow for positioning of the at least one tray (4) in the at least one seat (23b) and where said packaging chamber (24) is open to receive the film (18), and a second operating condition, where the upper and lower tools (21; 22) are configured to bring the film (18) into contact with the top rim (4c) of the at least one tray (4);
wherein - when the upper and lower tools are in the second operating condition - the sealing head (40) is configured to heat seal at least a peripheral portion (18b) of the film sheet (18) to the top rim (4c) of the tray (4), thereby creating a seal (90) extending along and around the top rim (4c), the seal (90) having an outward edge (91).

In a 30^{th} aspect according to the preceding aspect the sealing head (40) comprises at least one head corner region (41e) defining a corner portion of the head peripheral edge (41 a), which - when the upper and lower tools are in the second operating condition and the film peripheral portion (18b) contacts the top rim (4c) - is positioned and configured to delimit, in cooperation with the peripheral border (18d) of the film (18), at least one portion of a film corner flap (93) overlapping said top rim (4c) such that said at least one portion of the film corner flap (93) is not heat sealed by the sealing head to the top rim.

In a 31^{st} aspect according to any one of the preceding 2 aspects, said corner portion of the head peripheral edge (41 a) presents a shape different from the shape of the corner region (4e) of the peripheral rim edge (4d).

In a 32^{nd} aspect according to any one of the preceding 3 aspects, said corner portion of the head peripheral edge (41a) has a concavity directed to an outside of the head (40) and defines at least two wedge shaped portions each having a vertex of an angle of less than 135°.

In a 33^{rd} aspect according to any one of the preceding aspects from 29^{th} to 31^{st}, said corner portion of the head peripheral edge (41 a) has a concavity facing to an inside of the head (40) and defines at least one wedge shaped portion (94) having a vertex of an angle of more than 135°.

In a 34^{th} aspect according to any one of the preceding 5 aspects, said corner portion of the head peripheral edge (41 a) is a polygonal line or a curvilinear line.

In a 35^{th} aspect according to any one of the preceding aspects from 29^{th} to 31^{st}, said corner portion of the head peripheral edge (41a) is a single straight line.

In a 36^{th} aspect according to any one of the preceding 7 aspects, the head peripheral edge (41a) has a first width along a majority of the head peripheral edge and a second width in correspondence of the at least one head corner region (41 e), wherein the second width is less than the first width.

In a 37^{th} aspect according to the preceding aspect, the first width is substantially constant with the exception of at least one section in correspondence of the at least one head corner region (41e) and wherein a minimum of the second width is less than 50% of the first width.

In a 38^{th} aspect according to any one of the preceding 2 aspects, the second width of the head peripheral edge (41a) is variable along the head corner region (41e).

In a 39^{th} aspect according to any one of the preceding 10 aspects, the upper and lower tools, when in the second operating condition, are configured to position the at least one tray (4) with the peripheral rim edge (4d) radially extending beyond the corner portion of the head peripheral edge (41 a) of said active surface (41).

In a 40^{th} aspect according to any one of the preceding 11 aspects, further comprising:
a film cutting assembly (6) active on a continuous film (10a) and configured for cutting sheets of prefixed length from said continuous film (10a), thereby providing the film sheet (18) in the form of a sheet having a size sufficient to cover the mouth of the tray (4) and to engage the top rim (4c) of the tray (4) in correspondence of an entire perimeter of the tray (4).

In a 41^{st} aspect according to the preceding aspect each film sheet cut from said continuous film (10a) is sized such that it does not extend beyond the peripheral rim edge (4d) of the tray (4) except for a portion of the film in correspondence of the tray corner region (4e), when the cut film sheet is placed in superimposition with the respective tray (4).

In a 42^{nd} aspect according to any one of the preceding 2 aspects - when the upper and lower tools are in the second operating condition - the sealing head (40) is configured to seal the film sheet (18) to the top rim of the tray, with the peripheral border (18d) of the film sheet (18) radially protruding at said at least one head corner region (41e) outside the corner portion of the head peripheral edge (41a) of the active surface (41) and beyond the peripheral rim edge (4d) of the at least one tray (4).

In a 43^{rd} aspect according to any one of the preceding 14 aspects, further wherein the sealing head is configured for heat sealing of the film (18) to the top rim (4c) and for forming, in correspondence of said tray corner region (4e) said seal (90) delimiting said corner flap (93) which is not sealed to the top rim (4c) of the at least one tray (4) and which presents a first flap portion (93') extending outside the peripheral rim edge (4d) of the at least one tray (4) and a second flap portion (93") extending inside the peripheral rim edge (4d) of the at least one tray (4), optionally wherein a size of the second flap portion (93") is equal to or greater than a size of the first flap portion (93'), more optionally wherein the size of the second flap portion (93") is at least 200% of the size of the first flap portion (93'), further optionally wherein the size of the second flap portion (93") is at least 300% of the size of the first flap portion (93').

In a 44^{th} aspect according to any one of the preceding 15 aspects the head peripheral edge (41a) at the head corner region (41e) comprises a corner projection extending outwardly from a projection base point of the head peripheral edge (41 a) located at the head corner region (41 e).

In a 45^{th} aspect according to the preceding aspect the corner projection extends from the head peripheral edge (41a) substantially perpendicularly with respect to a tangent of the head peripheral edge (41a) at the projection base point.

In a 46^{th} aspect according to any one of the preceding 17 aspects the active surface (41) further comprises at the head corner region (41e) an auxiliary active surface (41x) extending co-planar to the active surface (41), the auxiliary active surface (41x) exhibiting no direct connection to the active surface (41) within a common plane of the active surface (41) and the auxiliary active surface (41x), and wherein the auxiliary active surface is configured to seal at least part of flap portion of the corner flap (93) to the top rim (4c) of the tray (4).

In a 47^{th} aspect according to any one of the preceding 18 aspects the active surface (41) is planar and continuous, with the exception of the corner regions wherein one or more isolated auxiliary active surfaces may be present; wherein the active surface (41) has a non-constant width along the head corner region (41e), and wherein the active surface (41) has a substantially rectangular shape.

In a 48^{th} aspect according to any one of the preceding 19 aspects the sealing head (40) comprises a film holding plate (36) and wherein the sealing head (40) is peripherally associated to the film holding plate (36) and wherein the active surface (41) is a heating surface which extends radially outside with respect to an active surface (37) of the holding plate (36), wherein:
at least when the upper and lower tools (21; 22) are in the second operating condition, the active surface (41) of the sealing head (40) faces an end surface (23a) of an inner wall (23) delimiting a respective one of the at least one seat (23b) in the lower tool (22).

In a 49^{th} aspect according to the preceding aspect the sealing head (40) and the holding plate (36) are relatively movable the one with respect to the other along a main direction (A5) such that the heating surface (41) of the sealing head (40) may selectively be positioned in a position where it does not contact the film sheet (18) and in a position where it contacts the film sheet (18) positioned above a tray (4) located in the at least one seat (23b).

In a 50^{th} aspect according to any one of the preceding 21 aspects, the packaging assembly (8) is operatively associated to a control unit (100), wherein the control unit (100) is configured for controlling heating of the sealing head (40) such that the heating surface (41) is brought at least to a first temperature, said first temperature causing at least softening of the material forming the film peripheral border (18d) when the active surface is in contact with the film (18).

In a 51^{st} aspect according to the preceding aspect wherein the sealing head (40) comprises one of:
a metallic body embedding at least one resistive and/or inductive element connected to a power supply and to the control unit (100) which is configured for controlling the power supply to supply current to the resistive or inductive element such as to keep the temperature of the heating surface (41) within a prefixed range around said first temperature;
a metallic wire directly carried by the heating surface (41) of the sealing head (40), the metallic wire being connected to a power supply and to the control unit (100) which is configured for controlling the power supply to supply current to the metallic wire during discrete time intervals followed by time intervals where no current supply to the metallic wire takes place, in particular wherein the control unit (100) is configured for controlling the power supply to supply current to the metallic wire when sealing of the film sheet (18) to the tray (4) takes place; and
a printed circuit formed onto said heating surface (41) of the sealing head (40), the printed circuit being connected to a power supply and to the control unit (100) which is configured for controlling the power supply to supply current to the printed circuit during discrete time intervals followed by time intervals where no current supply to printed circuit takes place exclusively, in particular wherein the control unit (100) is configured for controlling the power supply to supply current to the printed circuit when sealing of the film sheet (18) to the tray (4) takes place.

A 52^{nd} aspect concerns an apparatus (1) for packaging a product (P), comprising:
a packaging assembly (8) of any one of the preceding aspects the 29^{th} to the 51^{st}

In a 53^{rd} aspect according to the preceding aspect, the apparatus further comprises:
a film supplying assembly (5) configured for supplying a continuous film (10a);
a film cutting assembly (6) active on the continuous film (10a) and configured for cutting film sheets (18) of prefixed length from said continuous film (10a).

In a 54^{th} aspect according to the preceding aspect the apparatus has a control unit (100) connected to the packaging assembly (8) and at least configured for commanding the packaging assembly (8) to pass from the first to the second operating condition and vice-versa, and to control the sealing head (40) and the film cutting assembly (6) such that said continuous film is cut into film sheets (18) having a size sufficient to cover the mouth of the tray (4) and the sealing head seals each film sheet (18) to the top rim of the respective tray (4) along said seal (90) with at least one portion of the film sheet corner flap (93) overlapping said top rim (4c) remaining not heat sealed to the top rim.

A 55^{th} aspect concerns a process of forming a package with a product (P) according to any one of aspects from the 1^{st} to the 29^{th}.

In a 56^{th} aspect according to the preceding aspect the process uses the packaging of any one of the preceding aspects relating to a packaging assembly.

In a 57^{th} aspect according to one of the preceding 2 aspects the process uses the apparatus of any one of the preceding aspects relating to an apparatus.

In a 58^{th} aspect according to any one of the preceding 3 aspects, the process comprises the steps of:
providing the tray (4) configured for hosting the product (P),
providing the film sheet (18) having said peripheral portion (18b) and peripheral border (18d);
applying the film sheet (18) to the tray (4) by heat bonding at least part of the peripheral portion (18b) to at least part of the top rim (4c) of the tray (4) in order to create said seal (90) extending all around the peripheral portion (18b) and the top rim (4c), the seal being obtained by softening and/or melting material of the peripheral portion (18b) and/or of the tray top rim (4c) and thereby welding the peripheral portion (18b) to said top rim (4c).

In a 59^{th} aspect according to the preceding aspect the step of providing a film sheet (18) comprises the sub-steps of:
unrolling a film (10a) from roll (10), and transversely cutting the unrolled portion of film (10a), thereby preparing the film sheet (18), wherein the film sheet (18) has a size sufficient to cover the mouth of the tray (4) and to engage the top rim (4c) of the tray (4) in correspondence of an entire perimeter of the tray (4); optionally the film (18) not extending beyond the peripheral rim edge (4d) of the tray (4) except for a portion of the film in correspondence of the tray corner region (4e) when the film sheet (18) is placed substantially in superimposition with the tray (4), further optionally wherein the cutting of the film (10a) takes place outside the packaging chamber (24) at a station remote from the location where the film sheets are coupled to the trays.

In a 60^{th} aspect according to any one of the preceding 5 aspects, while creating the seal (90) by heat bonding, the at least one portion of the corner flap (93) overlapping said top rim (4c) is defined said at least one portion of the corner flap not being heated (or at least not being heated to a point causing softening and/or melting of the film material) and thereby not being heat sealed to the top rim (4c).

In a 61^{st} aspect according to any one of the preceding 6 aspects, the process further comprises the steps of;
positioning the film sheet (18) into the packaging chamber (24) of the packaging assembly (8) and holding the film sheet with a film holder (36) arranged within the packaging chamber (24),
moving a tray (4) into the packaging chamber (24) and below the film holder (36), with the film sheet (18) substantially in superimposition of the respective tray (4),
closing the packaging chamber (24) with the cut film sheet (18) held above the tray (4), optionally the film sheet (18) being held at a distance sufficient to allow gas circulation inside the tray (4),
moving the tray (4) and/or the film sheet (18) such that the top rim (4c) is brought into contact with the film sheet (18) peripheral portion (18b),
heat sealing the film sheet (18) peripheral portion (18b) to the tray (4) top rim (4c).

In a 62^{nd} aspect according to the preceding aspect the step of closing comprises hermetically closing the packaging chamber.

In a 63^{rd} aspect according to any one of the preceding 2 aspect, the process comprises, after heat sealing, opening the (hermetically) closed packaging chamber (24), and moving the tray (4) having the film sheet (18) sealedly fixed thereto out of the packaging chamber (24).

In a 64^{th} aspect according to any one of the preceding 3 aspects the process comprises creating a vacuum level in the packaging chamber and forming a skin package.

In a 65^{th} aspect according to any one of the preceding 4 aspects wherein during heat sealing the film sheet, the process forms a seal (90) as described in any one of the package aspects from the 1^{st} to the 28^{th}.

### Brief description of the drawings

The present invention will become clearer by reading the following detailed description, given by way of example and not of limitation, to be read with reference to the accompanying drawings, wherein:
FIG. 1 is a schematic side view layout of an apparatus according to aspects of the invention. The layout of the apparatus of FIG. 1 may be present in all embodiments described herein;
FIGs. 2-5 are schematic side views relating to a first embodiment of a packaging apparatus according to aspects of the invention. In these figures, consecutive phases of a packaging process operated by the apparatus of the first embodiment are shown;
FIG. 6A shows a bottom view of a sealing head 40 relating to the first embodiment of the packaging apparatus according to aspects of the invention;
FIGS. 6B, 6C, and 6D respectively show perspective view, a top view, and a cross-section view of a corner region 41e of the sealing head 40 (as shown in FIG. 6A) in superimposition with a film sheet 18 and a tray 4; FIG. 6D shows a cross-section view taken along the dashed line VI-D as shown in FIG. 6C;
FIG. 6E shows a bottom view of prior art a sealing head 40' as a comparative example;
FIG. 6F shows a top view of a corner region of the prior art sealing head shown in FIG. 6E as a comparative example;
FIGs. 6G to 6L each respectively show a top view of a corner region 41e of a sealing head 40 in superimposition with a film sheet 18 and a tray 4, wherein different shapes of the sealing head and of the seal are illustrated;
FIGS. 7-11 are schematic side views again relating to the first embodiment of figures 2-5. In these figures, further consecutive phases of a packaging process operated by the apparatus of the first embodiment are shown;
FIGS. 12-16 are schematic side views relating to a second embodiment of a packaging apparatus according to aspects of the invention. In these figures, consecutive phases of a packaging process operated by the apparatus of the second embodiment are shown. The apparatus and process according to these figures are preferably intended to form a skin packaging.

### Definitions and conventions

It should be noted that in the present detailed description corresponding parts shown in the various figures are indicated with the same reference numerals through the figures. It is further noted that the figures are not to scale and the parts and components shown therein are schematic representations.

In the following description and claims the apparatus and process refer to packaging of a product inside a tray. The product may be a food product or other product.

As used herein, tray 4 denotes a container of the type having a base wall 4a, a side wall 4b, and a top rim 4c radially emerging from the side wall 4b. It is also noted that for the purpose of the present description the terms tray and support have the same meaning and can be used interchangeably. The trays 4 may have a polygonal shape such as a rectangular shape or a square shape for example. Trays may be manufactured by thermoforming or injection molding.

### The trays

The trays 4 described and claimed herein may be made of a single layer or, preferably, of a multi-layer polymeric material.

In case of a single layer material, suitable polymers include, for example, polystyrene, polypropylene, polyesters, high density polyethylene, poly(lactic acid), PVC, and the like, either foamed or solid.

Preferably the tray 4 is provided with gas barrier properties. As used herein such term refers to a film or sheet of material which has an oxygen transmission rate of less than 200 cm³/m²·day·atm, less than 150 cm³/m²·day·atm, less than 100 cm³/m²·day·atm as measured according to ASTM D-3985 at 23°C and 0% relative humidity. Suitable materials for gas barrier monolayer thermoplastic trays 4 are, for example, polyesters, polyamides and the like.

In case the tray 4 is made of a multi-layer material, suitable polymers are, for example, ethylene homo- and co-polymers, propylene homo- and co-polymers, polyamides, polystyrene, polyesters, poly(lactic acid), PVC and the like. Part of the multi-layer material can be solid and part can be foamed.

For example, the tray 4 may comprise at least one layer of a foamed polymeric material chosen from the group consisting of polystyrene, polypropylene, polyesters and the like.

The multi-layer material may be produced either by co-extrusion of all the layers using co-extrusion techniques or by glue- or heat-lamination of, for example, a rigid foamed or solid substrate with a thin film, usually called "liner". The thin film may be laminated either on the side of the tray 4 in contact with the product P or on the side facing away from the product P or on both sides. In the latter case the films laminated on the two sides of the tray 4 may be the same or different. A layer of an oxygen barrier material, for example (ethylene-co-vinyl alcohol) copolymer, is optionally present to increase the shelf-life of the packaged product P.

Gas barrier polymers that may be employed for the gas barrier layer are PVDC, EVOH, polyamides, polyesters and blends thereof. The thickness of the gas barrier layer will be set in order to provide the tray with an oxygen transmission rate suitable for the specific packaged product.

The tray may also comprise a heat sealable layer. Generally, the heat-sealable layer will be selected among the polyolefins, such as ethylene homo- or co-polymers, propylene homo- or co-polymers, ethylene/vinyl acetate copolymers, ionomers, and the homo- and co-polyesters, e.g. PETG, a glycol-modified polyethylene terephthalate.

Additional layers, such as adhesive layers, to better adhere the gas-barrier layer to the adjacent layers, may be present in the gas barrier material for the tray and are preferably present depending in particular on the specific resins used for the gas barrier layer.

In case of a multilayer material used to form the tray 4, part of this structure may be foamed and part may be unfoamed. For example, the tray 4 may comprise (from the outermost layer to the innermost food-contact layer) one or more structural layers, typically of a material such as foam polystyrene, foam polyester or foam polypropylene, or a cast sheet of e.g. polypropylene, polystyrene, poly(vinyl chloride), polyester or cardboard; a gas barrier layer and a heat-sealable layer.

The tray 4 may be obtained from a sheet of foamed polymeric material having a film comprising at least one oxygen barrier layer and at least one surface sealing layer laminated onto the side facing the packaged product, so that the surface sealing layer of the film is the food contact layer the tray. A second film, either barrier or non-barrier, may be laminated on the outer surface of the tray.

Specific tray 4 formulations are used for food products that require heating in a conventional or microwave oven before consumption. The surface of the container in contact with the product, i.e. the surface involved in the formation of the seal with the lidding film, comprises a polyester resin. For example, the container can be made of a cardboard coated with a polyester resin or it can be integrally made of a polyester resin. Examples of suitable containers for the package of the invention are CPET, APET or APET/CPET containers. Such containers can be either foamed or not foamed.

Trays 4 used in tray lidding or skin packaging applications containing foamed parts, have a total thickness lower than 8 mm, and, for example, may be comprised between 0.5 mm and 7.0 mm, more frequently between 1.0 mm and 6.0 mm.

In case of a rigid tray not containing foamed parts, the total thickness of the single-layer or multi-layer thermoplastic material is preferably less than 2 mm, and, for example, may be comprised between 0.1 mm and 1.2 mm, more frequently between 0.2 mm and 1.0 mm.

### The film or film material

The film sheet 18 or film material 10a described herein may be applied to the tray 4 to form a lid on the tray (e.g. for MAP - modified atmosphere packaging) or a skin-like cover in contact with the tray and product, and matching the contour of the product.

The film for skin packaging applications may be made of a flexible multi-layer material comprising at least a first outer heat-sealable layer, an optional gas barrier layer and a second outer heat-resistant layer. The outer heat-sealable layer may comprise a polymer capable of welding to the inner surface of the supports carrying the products to be packaged, for example, ethylene homo- or co-polymers, like LDPE, ethylene/alpha-olefin copolymers, ethylene/acrylic acid copolymers, ethylene/methacrylic acid copolymers, and ethylene/vinyl acetate copolymers, ionomers, co-polyesters (e.g. PETG).

The optional gas barrier layer preferably comprises oxygen impermeable resins like PVDC, EVOH, polyamides and blends of EVOH and polyamides. The outer heat-resistant layer may be made of ethylene homo- or copolymers, ethylene/cyclic-olefin copolymers, such as ethylene or norbornene copolymers, propylene homo- or co-polymers, ionomers, (co)polyesters, (co)polyamides.

The film may also comprise other layers such as adhesive layers or bulk layers to increase the thickness of the film and improve its properties regarding resistance and deep drawing. In particular, ionomers, ethylene/vinyl acetate copolymers, polyamides and polyesters are used in bulk layers. In all layers of the film, the polymer components may contain appropriate amounts of additives normally included in such compositions. Some of these additives are preferably included in the outer layers or in one of the outer layers, while some others are preferably added to inner layers. These additives include slip and anti-block agents such as talc, waxes, silica, and the like, antioxidants, stabilizers, plasticizers, fillers, pigments and dyes, cross-linking inhibitors, cross-linking enhancers, UV absorbers, odor absorbers, oxygen scavengers, bactericides, antistatic agents and the like additives known to those skilled in the art of packaging films.

One or more layers of the film can be cross- linked to improve the strength of the film and/or its heat resistance. Cross-linking may be achieved by using chemical additives or by subjecting the film layers to an energetic radiation treatment. The films for skin packaging are typically manufactured in order to show low shrink when heated during the packaging cycle. Those films usually shrink less than 15% at 160°C, more frequently lower than 10%, even more frequently lower than 8% in both the longitudinal and transversal direction (ASTM D2732). The films usually have a thickness comprised between 20 microns and 200 microns, more frequently between 40 and 180 microns, and even more frequently between 50 microns and 150 microns.

The skin packages are usually "easy-to-open", i.e. they are easily openable by manually pulling apart the two webs, normally starting from a point like a corner of the package where the upper web has purposely not been sealed to the support. To achieve this feature, either the film or the tray can be provided with a suitable composition, allowing easy opening of the package as known in the art. Typically, the sealant composition and/or the composition of the adjacent layer of the tray and/or the film are adjusted in order to achieve the easy opening feature.

Various mechanisms can occur while opening an easy-to-open package.

In the first one ("peelable easy opening"), the package is opened by separating the film and the tray at the seal interface.

In the second mechanism ("adhesive failure") the opening of the package is achieved through an initial breakage through the thickness of one of the sealing layers followed by delamination of this layer from the underlying support or film.

The third system is based on the "cohesive failure" mechanism. The easy opening feature is achieved by internal rupture of a seal layer that, during opening of the package, breaks along a plane parallel to the layer itself.

Specific blends are known in the art to obtain such opening mechanisms, ensure the peeling of the film from the tray surface, such as those described in EP1084186.

On the other hand, in case the film 10a is used for creating a lid on the tray 4, the film material may be obtained by co-extrusion or lamination processes. Lid films may have a symmetrical or asymmetrical structure and can be of a single layer or multi layer type.

The multilayer films have at least 2, more frequently at least 5, and even more frequently at least 7 layers.

The total thickness of the film may vary from 3 to 100 micron, more frequently from 5 to 50 micron, even more frequently from 10 to 30 micron.

The films may optionally be cross-linked. Cross-linking may be carried out by irradiation with high energy electrons at a suitable dosage level as known in the art. The lid films described above may be heat shrinkable or heat-set. The heat shrinkable films typically show a free shrink value measured at 120°C according to ASTM D2732 in the range of from 2 to 80%, more frequently from 5 to 60%, even more frequently from 10 to 40% in both the longitudinal and the transverse direction. The heat-set films usually have free shrink values lower than 10% at 120°C, preferably lower than 5% in both the longitudinal and transversal direction (ASTM D 2732).

Lid films usually comprise at least a heat sealable layer and an outer skin layer, which is generally made up of heat resistant polymers or polyolefin. The sealing layer typically comprises a heat-sealable polyolefin which in turn comprises a single polyolefin or a blend of two or more polyolefins such as polyethylene or polypropylene or a blend thereof. The sealing layer can be further provided with anti-fogging properties by incorporating one or more anti-fogging additives into its composition or by coating or spraying one or more anti-fogging additives onto the surface of the sealing layer by technical means known in the art.

The sealing layer may further comprise one or more plasticizers. The skin layer may comprise polyesters, polyamides or polyolefin. In some structures, a blend of polyamide and polyester can advantageously be used for the skin layer. In some cases, the lid films comprise a barrier layer. Barrier films typically have an OTR (evaluated at 23°C and 0 % R.H. according to ASTM D-3985) below 100 cm³/(m²·day·atm) and more frequently below 80 cm³/(m²·day·atm). The barrier layer is usually made of a thermoplastic resin selected among a saponified or hydrolyzed product of ethylene-vinyl acetate copolymer (EVOH), an amorphous polyamide and a vinyl-vinylidene chloride and their admixtures. Some materials comprise an EVOH barrier layer, sandwiched between two polyamide layers. The skin layer typically comprises polyesters, polyamides or polyolefin.

In some packaging applications, the lid films do not comprise any barrier layer. Such films usually comprise one or more polyolefin herein defined. Non-barrier films typically have an OTR (evaluated at 23°C and 0 % R.H. according to ASTM D-3985) from 100 cm³/(m²·day·atm) up to 10000 cm³/(m²·day·atm), more typically up to 6000 cm³/(m²·day·atm).

Peculiar polyester-based compositions are those used for tray lidding of ready-to-eat meal packages. For these films, the polyester resins can make up at least 50%, 60%, 70%, 80%, or 90% by weight of the film. These films are typically used in combination with polyester-based supports.

For example, the container can be made of a cardboard coated with a polyester resin or it can be integrally made of a polyester resin. Examples of suitable containers for the package are CPET, APET or APET/CPET containers, either foamed or not foamed.

Usually, biaxially oriented PET is used as the lid film due to its high thermal stability at standard food heating/cooking temperatures. Often biaxially oriented polyester films are heat-set, i.e. non-heat-shrinkable. To improve the heat-sealability of the PET lidding film to the container a heat-sealable layer of a material with a lower melting point is usually provided on the film. The heat-sealable layer may be coextruded with the PET base layer (as disclosed in EP-A-1529797 and WO2007/093495) or it may be solvent- or extrusion-coated over the base film (as disclosed in US 2,762,720 and EP-A-1252008).

Particularly in the case of fresh meat packages, twin lidding film comprising an inner, oxygen-permeable, and an outer, oxygen-impermeable, lidding film are advantageously used. The combination of these two films significantly prevents the meat discoloration also when the packaged meat extends upwardly with respect to the height of the tray walls, which is the most critical situation in barrier packaging of fresh meat. These films are described for example in EP1848635 and EP0690012, the disclosures of which are incorporated herein by reference. In some examples, twin lidding film can be made by sealing two suitable films in the region of the corners by means of very small bonding or sealing points. In this manner, the twin lidding film can be handled more easily in the different stages of the packaging process.

The lid film can be monolayer. Typical compositions of monolayer films comprise polyesters as herein defined and their blends, or polyolefins as herein defined and their blends.

In all the film layers described herein, the polymer components may contain appropriate amounts of additives normally included in such compositions. Some of these additives are preferably included in the outer layers or in one of the outer layers, while some others are preferably added to inner layers. These additives include slip and anti-block agents such as talc, waxes, silica, and the like, antioxidants, stabilizers, plasticizers, fillers, pigments and dyes, cross-linking inhibitors, cross-linking enhancers, UV absorbers, odor absorbers, oxygen scavengers, bactericides, antistatic agents, anti-fogging agents or compositions, and the like additives known to those skilled in the art of packaging films.

The films suitable for lidding applications can advantageously be perforated, in order to allow the packaged food to breath.

Those films may be perforated by using different technologies available in the art, through laser or mechanical means such as rolls provided with several needles.

The number of perforations per unit area of the film and their dimensions affect the gas permeability of the film.

Micro perforated films are usually characterized by OTR value (evaluated at 23°C and 0 % R.H. according to ASTM D-3985) from 2500 cm³/(m²·day·atm) up to 1000000 cm³/(m²·day·atm).

Macro perforated films are usually characterized by OTR (evaluated at 23°C and 0 % R.H. according to ASTM D-3985) higher than 1000000 cm³/(m²·day·atm).

Furthermore, the films herein described for lidding applications can be formulated to provide strong or peelable sealing onto the support. A method of measuring the force of a peelable seal, herein referred to as "peel force" is described in ASTM F-88-00. Acceptable peel force values fare in the range from 100 g/25 mm to 850 g/25 mm, from 150 g/25 mm to 800 g/25 mm, from 200 g/25 mm to 700 g/25 mm.

The desired seal strength is achieved specifically designing the tray and the lid formulations.

In general, one or more layers of the lid film can be printed, in order to provide useful information to the consumer, a pleasing image and/or trademark or other advertising information to enhance the retail sale of the packaged product.

The film may be printed by any suitable method, such as rotary screen, gravure or flexographic techniques as known in the art.

### Definitions and conventions concerning materials

PVDC is any vinylidene chloride copolymers wherein a major amount of the copolymer comprises vinylidene chloride and a minor amount of the copolymer comprises one or more unsaturated monomers copolymerizable therewith, typically vinyl chloride, and alkyl acrylates or methacrylates (e.g. methyl acrylate or methacrylate) and the blends thereof in different proportions. Generally a PVDC barrier layer will contain plasticizers and/or stabilizers as known in the art.

As used herein, the term EVOH includes saponified or hydrolyzed ethylene-vinyl acetate copolymers, and refers to ethylene/vinyl alcohol copolymers having an ethylene co-monomer content preferably comprised from about 28 to about 48 mol%, more preferably, from about 32 to about 44 mol% ethylene, and even more preferably, and a saponification degree of at least 85%, preferably at least 90%.

The term "polyamides" as used herein is intended to refer to both homo- and co- or ter-polyamides. This term specifically includes aliphatic polyamides or co-polyamides, e.g., polyamide 6, polyamide 11, polyamide 12, polyamide 66, polyamide 69, polyamide 610, polyamide 612, copolyamide 6/9, copolyamide 6/10, copolyamide 6/12, copolyamide 6/66, copolyamide 6/69, aromatic and partially aromatic polyamides or co-polyamides, such as polyamide 61, polyamide 6I/6T, polyamide MXD6, polyamide MXD6/MXDI, and blends thereof.

As used herein, the term "copolymer" refers to a polymer derived from two or more types of monomers, and includes terpolymers. Ethylene homopolymers include high density polyethylene (HDPE) and low density polyethylene (LDPE). Ethylene copolymers include ethylenelalpha-olefin copolymers and ethylene/unsaturated ester copolymers. Ethylene/alpha-olefin copolymers generally include copolymers of ethylene and one or more co-monomers selected from alpha-olefins having from 3 to 20 carbon atoms, such as 1-butene, 1-pentene, 1-hexene, 1-octene, 4-methyl-1-pentene and the like.

Ethylene/alpha-olefin copolymers generally have a density in the range of from about 0.86 to about 0.94 g/cm3. The term linear low density polyethylene (LLDPE) is generally understood to include that group of ethylene/alphaolefin copolymers which fall into the density range of about 0.915 to about 0.94 g/cm³ and particularly about 0.915 to about 0.925 g/cm³. Sometimes linear polyethylene in the density range from about 0.926 to about 0.94 g/cm³ is referred to as linear medium density polyethylene (LMDPE). Lower density ethylenelalpha-olefin copolymers may be referred to as very low density polyethylene (VLDPE) and ultra-low density polyethylene (ULDPE). Ethylene/alpha-olefin copolymers may be obtained by either heterogeneous or homogeneous polymerization processes.

Another suitable ethylene copolymer is an ethylene/unsaturated ester copolymer, which is the copolymer of ethylene and one or more unsaturated ester monomers. Suitable unsaturated esters include vinyl esters of aliphatic carboxylic acids, where the esters have from 4 to 12 carbon atoms, such as vinyl acetate, and alkyl esters of acrylic or methacrylic acid, where the esters have from 4 to 12 carbon atoms.

lonomers are copolymers of an ethylene and an unsaturated monocarboxylic acid having the carboxylic acid neutralized by a metal ion, such as zinc or, preferably, sodium.

Useful propylene copolymers include propylene/ethylene copolymers, which are copolymers of propylene and ethylene having a majority weight percent content of propylene, and propylene/ethylene/butene terpolymers, which are copolymers of propylene, ethylene and 1-butene.

As used herein, the term "polyolefin" refers to any polymerized olefin, which can be linear, branched, cyclic, aliphatic, aromatic, substituted, or unsubstituted. More specifically, included in the term polyolefin are homopolymers of olefin, co-polymers of olefin, co-polymers of an olefin and an non-olefinic co-monomer copolymerizable with the olefin, such as vinyl monomers, modified polymers thereof, and the like. Specific examples include polyethylene homo-polymer, polypropylene homo-polymer, polybutene homo-polymer, ethylene-alpha-olefin co-polymer, propylene-alpha-olefin co-polymer, butene-alpha-olefin co-polymer, ethylene-unsaturated ester co-polymer, ethylene-unsaturated acid co-polymer, (e.g. ethylene-ethyl acrylate co-polymer, ethylene-butyl acrylate co-polymer, ethylene-methyl acrylate co-polymer, ethylene-acrylic acid co-polymer, and ethylene-methacrylic acid co-polymer), ethylene-vinyl acetate copolymer, ionomer resin, polymethylpentene, etc.

The term "polyester" is used herein to refer to both homo-and co- polyesters, wherein homo-polyesters are defined as polymers obtained from the condensation of one dicarboxylic acid with one diol and co-polyesters are defined as polymers obtained from the condensation of one or more dicarboxylic acids with one or more diols. Suitable polyester resins are, for example, polyesters of ethylene glycol and terephthalic acid, i.e. poly(ethylene terephthalate) (PET). Preference is given to polyesters that contain ethylene units and include, based on the dicarboxylate units, at least 90 mol%, more preferably at least 95 mol%, of terephthalate units. The remaining monomer units are selected from other dicarboxylic acids or diols. Suitable other aromatic dicarboxylic acids are preferably isophthalic acid, phthalic acid, 2,5-, 2,6- or 2,7-naphthalenedicarboxylic acid. Of the cycloaliphatic dicarboxylic acids, mention should be made of cyclohexanedicarboxylic acids (in particular cyclohexane-1,4-dicarboxylic acid). Of the aliphatic dicarboxylic acids, the (C₃-Ci₉)alkanedioic acids are particularly suitable, in particular succinic acid, sebacic acid, adipic acid, azelaic acid, suberic acid or pimelic acid. Suitable diols are, for example aliphatic diols such as ethylene glycol, diethylene glycol, triethylene glycol, propylene glycol, 1,3-butane diol, 1,4- butane diol, 1,5-pentane diol, 2,2-dimethyl-1,3-propane diol, neopentyl glycol and 1,6-hexane diol, and cycloaliphatic diols such as 1,4- cyclohexanedimethanol and 1,4-cyclohexane diol, optionally heteroatomcontaining diols having one or more rings.

Co-polyester resins derived from one or more dicarboxylic acid(s) or their lower alkyl (up to 14 carbon atoms) diesters with one or more glycol(s), particularly an aliphatic or cycloaliphatic glycol may also be used as the polyester resins for the base film. Suitable dicarboxylic acids include aromatic dicarboxylic acids such as terephthalic acid, isophthalic acid, phthalic acid, or 2,5-, 2,6- or 2,7-naphthalenedicarboxylic acid, and aliphatic dicarboxylic acids such as succinic acid, sebacic acid, adipic acid, azelaic acid, suberic acid or pimelic acid. Suitable glycol(s) include aliphatic diols such as ethylene glycol, diethylene glycol, triethylene glycol, propylene glycol, 1,3-butane diol, 1,4-butane diol, 1,5-pentane diol, 2,2- dimethyl-1,3-propane diol, neopentyl glycol and 1,6-hexane diol, and cycloaliphatic diols such as 1,4-cyclohexanedimethanol and 1,4- cyclohexane diol. Examples of such copolyesters are (i) copolyesters of azelaic acid and terephthalic acid with an aliphatic glycol, preferably ethylene glycol; (ii) copolyesters of adipic acid and terephthalic acid with an aliphatic glycol, preferably ethylene glycol; and (iii) copolyesters of sebacic acid and terephthalic acid with an aliphatic glycol, preferably butylene glycol; (iv) co-polyesters of ethylene glycol, terephthalic acid and isophthalic acid. Suitable amorphous copolyesters are those derived from an aliphatic diol and a cycloaliphatic diol with one or more, dicarboxylic acid(s), preferably an aromatic dicarboxylic acid. Typical amorphous copolyesters include co-polyesters of terephthalic acid with an aliphatic diol and a cycloaliphatic diol, especially ethylene glycol and 1,4- cyclohexanedimethanol.

### Detailed description

### First embodiment of the apparatus 1

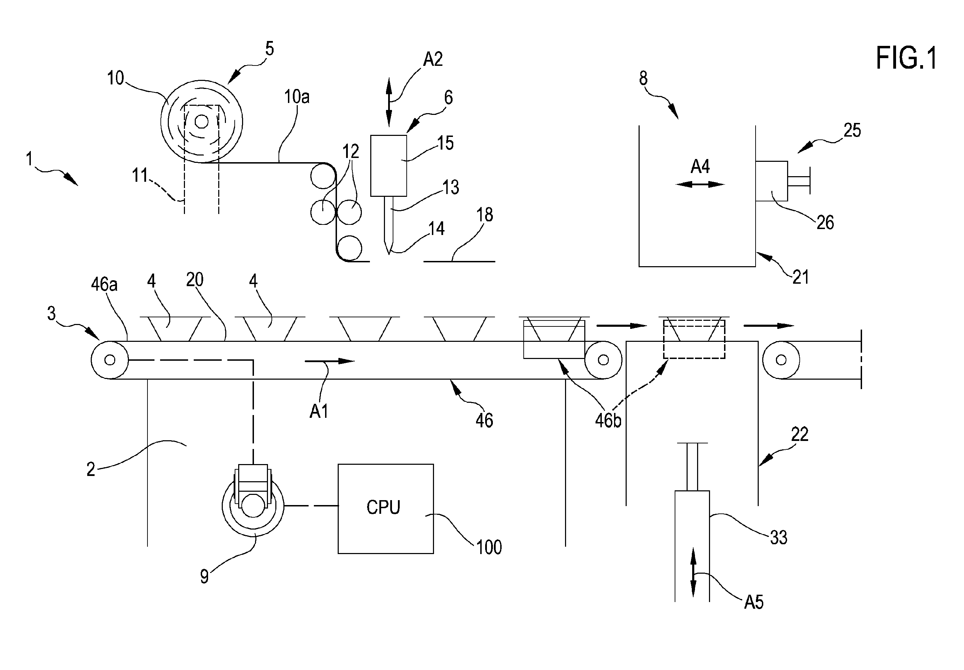

FIGs. 1-5 and 7-11 show an apparatus 1 for packaging of a product P arranged on a support or tray 4 according to an embodiment of the present invention. The apparatus 1 is adapted for modified atmosphere packaging, where a plastic film, such as film sheet 18 described below, is applied to the top rim 4c of a tray 4 after a modified gas atmosphere has been created inside the tray 4, and/or for vacuum skin packaging of the product P, where a thin film of plastic material, such as film sheet 18 described below, is draped down on the product and intimately adheres to a top rim 4c and to the inner surface of the support 4 as well as to the product surface thus leaving a minimum, if any, amount of air or modified gas within the packaging. The apparatus 1 may also be used in case a film sheet applied to a tray and neither vacuum nor modified atmosphere is created.

The apparatus 1 comprises a frame 2, a transport assembly 3 for displacing the tray 4, a film supplying assembly 5, a film cutting assembly 6, and a packaging assembly 8. Apparatus 1 can further comprise a suitable transport assembly (not shown) for transporting and/or positioning the film 18 for sealing. Alternatively, apparatus 1 can comprise, for example, a packaging assembly, which facilitates pick up and positioning of the film sheet 18 by a movable component of the packaging assembly.

The tray 4 shown in the enclosed figures presents a base wall 4a, a side wall 4b emerging from the base wall and delimiting a space where a product P can be housed, and a top rim 4c radially protruding from the side wall 4b. The top rim 4c terminates at (or along) a peripheral rim edge 4d. In the example shown the top rim 4c has a horizontal flat portion defining a suitable sealing surface for sealed fixing of a plastic film.

The frame 2 defines a base body of the apparatus 1 and serves to carry and support various parts of the apparatus 1 as herein described.

The transport assembly 3 comprises a displacement plane 20, which may be a physical plane (e.g. a conveyor belt) carrying and displacing the trays or an ideal plane along which the trays are guided (e.g. by means of rails or guides). The plane 20 is defined on a top area of the frame and a conveyor 46 is arranged in correspondence of the sliding plane 20. In the example shown, the transport assembly 3 is carried by, e.g. fixed to, the frame 2 so that the sliding plane 20 is substantially horizontal and the conveyor 46 moves the trays 4 according to the horizontal direction indicated by the arrow A1 shown in FIG. 1. The transport assembly 3 arranged on the frame 2 is configured for displacing the tray 4 along a predefined path from a loading station, where supports or trays 4 which may already be filled with the respective product(s) P are positioned, to the packaging assembly 8 where a film sheet 18 is tightly fixed to each tray 4, as explained in detail below. The conveyor 46 displaces the trays (e.g. a prefixed number of trays each time) towards and into the packaging chamber, into proper position for receiving the cut film sheets. For example, a control unit 100 (which is further described below) may control the conveyor 46 to displace a prefixed number of trays 4 each time from a region outside the packaging assembly 8 to a region within the packaging assembly 8 where the tray or trays are in vertical alignment with the film sheets (e.g. directly below or in superimposition therewith). The conveyor may, for example, include a first transfer device 46a (such as the belt shown in FIG. 1) configured for bringing the trays in close proximity to the packaging assembly and a second transfer device 46b adapted to pick up one or more of said trays and to bring them into the packaging assembly 8. The second transfer device may, for example, include actuators or arms acting on the sides of the trays such as to pick up the supports from the first transfer device, to bring them into the packaging station, and then to return to the first transfer device to pick up a new set of trays 4. Alternatively, the conveyor 46 may include pushers (e.g. in the form of bars extending transverse to said direction A1) acting on the trays and pushing the trays into the packaging assembly 8. The pushers may be moved by chains or belts and may be moved into the packaging assembly to properly position a number of trays, and then be retracted from the packaging assembly, once the trays have reached their proper position inside the packaging assembly. In some examples, the pushers can be integrated into the packaging assembly in a manner not interfering with the process taking place inside the packaging assembly. In these examples, the pushers are extended in order to retrieve a number of trays and move them into the packaging assembly, into which the pushers are fully retracted and where they subsequently remain until opening of the packaging assembly following the execution of the process taking place inside the packaging assembly. According to a further alternative, the conveyor 46 may include housings (e.g. in the form of plates provided with cavities for receiving a number of trays) which are moved along the direction A1 and which are moving inside the packaging station together with the supports or trays 4. According to this alternative, the housings have a suitable shape in order to be hosted inside the packaging station during the application of the film 10a to the tray 4.

It is noted that the products P may be positioned on the tray 4 either upstream from the loading station or in any location between the loading station and the packaging assembly 8. The transport assembly 3 further comprises at least one motor 9 (e.g. a stepping motor unit) for operating the conveyor 46 with a continuous or step-by-step movement.

The film supply assembly 5 may comprise a film roll 10 supplying a continuous film 10a. The film supplying assembly 5 may further comprise an arm 11 (represented in dashed lines in FIG. 1) fixed to the frame 2 and suitable for supporting the roll 10. Further, the film supplying assembly 5 may comprise film punching devices (not shown, as these are known in the art) essentially configured to provide the correct profile to the film edges to match (when transversally cut in the cutting assembly 6) the shape of the tray 4 opening having e.g. rounded corners and corresponding one or more corner flaps. In some examples, the film sheets 18 have substantially the same contour as the top rim 4c of the tray 4, except for one or more corner regions, where the film sheets are cut in such a manner as to present a corner flap 93 extending beyond the contour of the top rim 4c of tray 4 (i.e. beyond the peripheral rim edge 4d of the top rim 4c).

In some examples, the trays 4 and film sheets 18 are configured to present one such corner region and corner flap. In other examples, the trays 4 and film sheets 18 are configured to present multiple such corner regions and corner flaps: e.g. 4 corner flaps at the four corners of a substantially rectangular film sheet in superimposition with and sealed to a substantially rectangular tray 4, the tray 4 having, for example, rounded corners or corner regions 4e. The punching devices may also help to keep an unrolled portion of film pulled from the film roll 10 aligned according to a prefixed direction. The film supplying assembly 5 also comprises pinch rollers 12 and/or other means configured for pulling the film from the roll 10 and properly position it in correspondence of the film cutting assembly 6. For instance in place or in addition to pinch rollers other means for pulling the film may comprise pincers acting on the side of the film and/or pincers acting on an edge of the film (e.g. the front edge or side edges) and configured to pull the film.

The type of film 10a rolled up on the film roll 10 and supplied to the apparatus 1 may correspond to one of the types of film described above, depending upon the specific application.

The film cutting assembly 6 comprises a cutting device 13 with a blade 14 and a blade piston 15. This piston 15 may be replaced by any other kind of electric, pneumatic, or hydraulic (linear) actuator. The blade piston 15 is preferably fixed to the frame 2 and is connected to the cutting device 13 so as to push and pull it in a direction transverse to the unrolled portion of the film 10a, as indicated by the double arrow A2 shown in FIG. 1. The film cutting assembly 6 is described here, illustrating one possibility of supplying the film to the packaging apparatus. In some examples, however, the film material can be supplied in a manner where the film is pre-cut and supplied, for example, on a sheet by sheet basis, delivered from a stack of pre-cut film sheets. In one example, the film sheets 18 are prepared by transversally cutting film 10a in substantially rectangular film sheets, presenting four corner flaps 93 when sealed to trays 4 having a corresponding rectangular shape and rounded corner regions. In other examples, the cutting assembly can be arranged differently (e.g. vertically) and the film sheets can be supplied in a different manner (e.g. for pick up by a movable sealing head).

Once the discrete film sheets are prepared they are transferred by a suitable transfer device to the packaging assembly 8 of the packaging apparatus 1, in synchrony with positioning of the trays 4 at the lower tool seat(s) 23a such that each single sheet 18 is positioned right above the respective tray 4 inside the packaging assembly 8. It is noted that the individual manner in which the film sheets are supplied merely serves to provide an example and that different ways to transport the film sheets 18 or to pick up the film sheets 18 can be employed.

Also note that - in accordance with a further possibility (not shown) - the cutting device 13 may be hosted inside the packaging assembly 8 and e.g. carried by the upper tool 21 which is part of the assembly 8 as it is further described herein below. In this case the film 10a arrives as a continuous uninterrupted film inside the packaging assembly (e.g. moved by lateral chains with pincers) and is cut into film sheets having substantially the size of the tray. More in detail the cutting device may be inside the packaging assembly and be configured to cut the film sheet just before heat sealing it to the tray when the appropriate portion of film is right above the respective tray.

Generally, the packaging assembly 8 is configured for tightly fixing the film sheets 18 to trays 4 and includes a lower tool 22 and an upper tool 21. The lower tool 22 has a number of inner walls 23 defining a prefixed number of seats 23b. In one embodiment the lower tool 22 is provided with multiple seats 23b each for hosting a corresponding tray 4. In this case the upper tool 21 is provided with a corresponding plurality of holding plates 36 each for holding a respective film sheet 18.

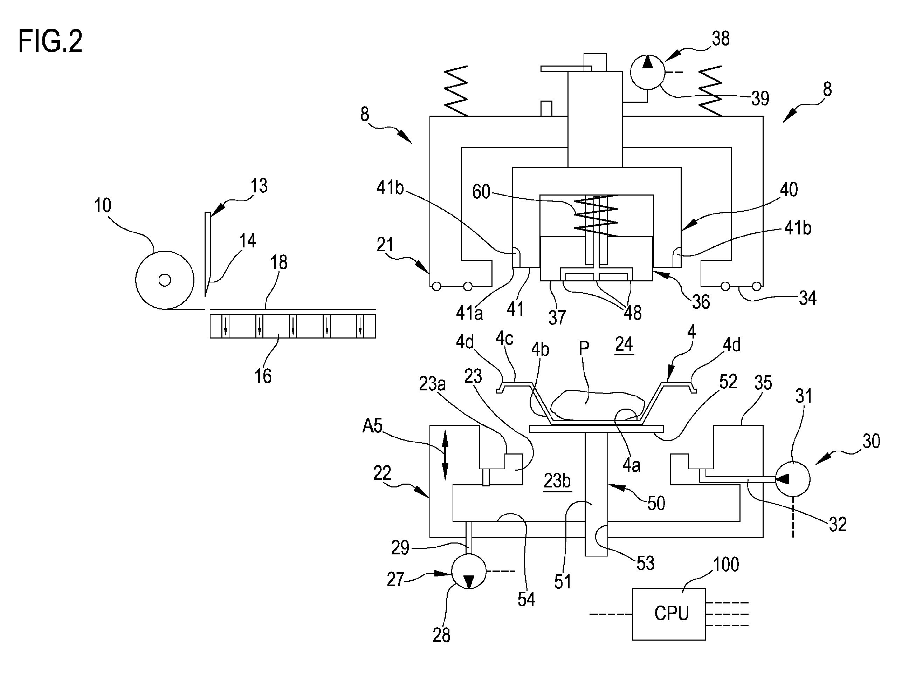

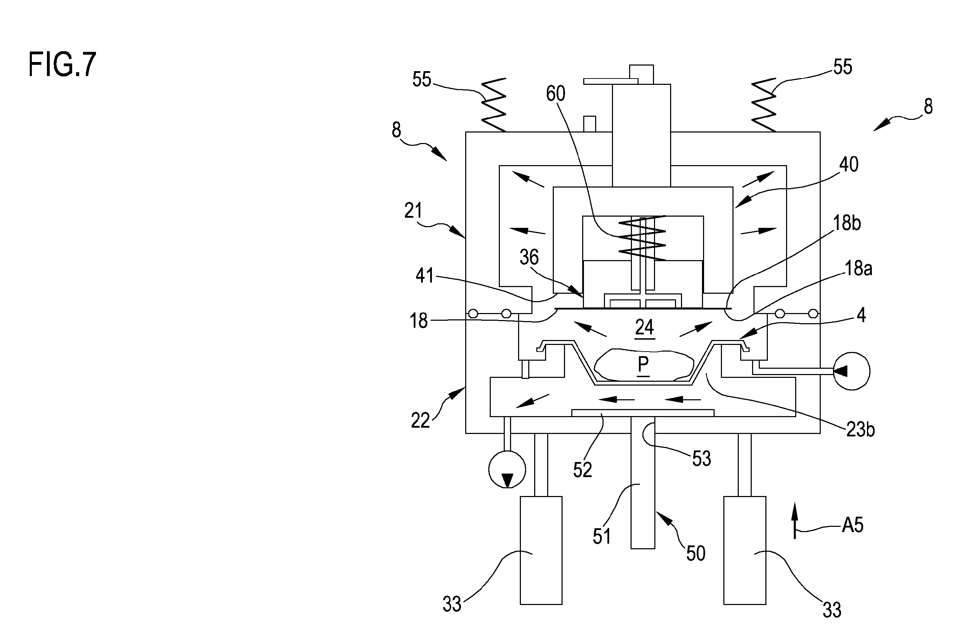

Each of seats 23b is configured for receiving one tray 4. For example, in the embodiment of FIGs. 2-5 and 7-11 the seat 23b is peripherally delimited by inner wall 23 and the tray 4 is received within the seat 23b such that the top rim 4c may rest above the end surface 23a of the inner wall 23. The upper tool 21 faces the lower tool 22 and is configured for holding one or more of said film sheets 18: in the example shown in FIGs. 2-5 and 7-11 the upper tool 21 is configured for holding one cut film sheet 18. As shown, the upper and lower tools 21, 22 cooperate to define a packaging chamber 24. In a first operating condition of the packaging assembly 8 - shown in FIGs. 2-5 and 11 - the upper and lower tools 21 and 22 are spaced apart and the packaging chamber 24 is open thereby allowing one or more of said film sheets 18 to move from the cutting assembly 6 into the packaging chamber 24, as further detailed below. In a second operating condition of the packaging assembly 8 - shown in FIGs. 7-10 the packaging chamber 24 is hermetically closed with respect to an atmosphere outside the apparatus 1.

It is noted that within the scope of this document the term "hermetically closed" denotes that the inside of the packaging chamber 24 cannot freely communicate with the atmosphere outside the chamber and gas may be supplied or withdrawn from the chamber only via supply or discharge channels under the control of the apparatus 1.

As mentioned herein above, a suitable transfer device is configured for positioning the cut film sheets 18 inside the packaging chamber 24 and above the respective tray 4. The transfer device can include, for example, a backing structure 16 having a flat holding surface 17 adapted for receiving the at least one or more film sheets 18 cut by blade 14. While backing structure 16 is described here and shown in the figures as having a substantially flat holding surface 17, it is noted that the holding surface 17 does not have to be flat, but can have any suitable shape (e.g., concave, convex, corrugated, having some texture, having protrusions and/or recesses, etc.). FIG. 1 shows that the blade 14 is configured to cut the continuous film 10a such that a separate film sheet 18 can be positioned in correspondence of the flat holding surface 17. The backing structure 16 may hold the cut film sheet 18 using one or more of:
- a vacuum system connected to one or more channels present in the backing structure and leading to apertures located one holding surface 17,
- mechanical holders, such as pincers, clamps or the like,
- adhesive systems, for example comprising adhesive portions associated to the holding surface 17,
- heating systems, for example comprising heatable portions (controlled by control unit 100) associated to the backing structure causing heating of the holding surface 16 and thus of the film sheet 18 in order to increase stickiness of the film sheet to the holding surface 17,
- electric systems, for example the holding surface may be charged with a polarity different from that typical of the plastic sheet 18. In this case the control unit may be connected to a voltage generator and may control the electric charging of surface 17.

In the embodiments shown, the backing structure 16 is shown as employing a vacuum system that is configured to create negative pressure on the side of the flat holding surface 17 by evacuation of air or gas through channels 16a (shown in FIG. 2) present in the backing structure 16, the channels 16a defining apertures located in the flat holding surface 17. Again, while backing structure 16 and holding surface 17 are described here and shown in the figures as being substantially flat, it is noted that the respective elements could have any suitable non-flat shape (e.g., concave, convex, with some texture, having protrusions and/or recesses, etc.). The channels 16a and/or the corresponding apertures can be arranged, sized and/or shaped in a manner suitable for the intended application, for example depending on the material or type of film 10 used. For example, the size, shape, and number, as well as the individual distribution of the channels 16a over the area of the backing structure 16 can be adapted as desired. For thicker, stronger, and/or heavier film materials, for example, the channels 16a and/or corresponding apertures can have a larger size (e.g. a larger diameter) and/or be distributed more densely, while for thinner, weaker, and/or lighter film materials, the channels 16a and/or corresponding apertures can have a smaller size (e.g. a smaller diameter) and/or be distributed more sparsely.

The channels 16a are in fluid communication with a suitable vacuum source or evacuation means (not shown) as known in the art. In addition to the type and distribution of channels and/or apertures, the vacuum source or evacuation means can be controlled in a manner suitable for the individual film materials used, in a manner known in the art. For clarity, individual additional components known in the art, for example, the vacuum source or evacuation means, manifolds, connecting channels, lines, valves, etc. are not shown in all figures.

As an alternative, instead of moving the backing structure 16, the upper tool 21 may be mobile with respect to frame 2 and be configured to pick up the cut film sheets 18 from the area immediately downstream the cutting device 13. In this case the transfer device would include a mechanism 25, for example carried by frame 2, active on the packaging assembly 8 and configured for displacing the upper tool 21 between a first position, where the upper tool 21 is positioned in correspondence of the backing structure 16 and configured to pick up the one or more cut film sheets 18 from the backing structure 16, and at least a second position, where the upper tool 21 is aligned to the lower tool 22 and configured to position at least one film sheet 18 above said tray 4. In order to achieve the above movement the mechanism may displace the upper tool 21 along any suitable path. For example, FIG. 1 schematically shows that the mechanism 25 may include a transfer actuator 26 configured for pushing and pulling the upper tool 21 along a direction parallel to said horizontal direction A1 as indicated by double arrow A4 in FIG. 1. As an alternative, the mechanism 29 may cause rotation of the upper tool around a pivoting axis; as a further alternative the mechanism 29 may cause both a pivoting movement and a translational displacement in order to move the upper tool from said respective first and second positions. The transfer actuator 26 may be in the form of a piston. It may be replaced by any other kind of electric, pneumatic or hydraulic linear actuator known in the art. In FIG. 1 the apparatus 1 includes the mechanism 25 described above.

The apparatus 1 also includes at least one control unit 100, which is connected to the transport assembly 3, to the film supplying assembly 5, to the film cutting assembly 6, and to the packaging assembly 8. The control unit 100, which is schematically represented in FIG. 1, is further configured for activating a suitable motor or actuator so as to control motion of the backing structure 16 (or of the upper tool 21, as described above), into the different operating positions described above. The control unit 100 is also configured for synchronizing activation of the transfer device with passage of the packaging assembly 8 from the first to the second operating condition so that the movement of the backing structure 16 is caused to take place when the packaging chamber 24 is open while the packaging chamber 24 is closed only once the backing structure 16 has transferred the cut film sheet 18 to the upper tool 21 and has been retracted from the packaging chamber 24. The control unit may also be configured for synchronizing the conveyor 46 such that movement of a prefixed number of trays 4 from a region outside the packaging chamber 24 to a region inside the packaging chamber 24 is caused to take place when the packaging chamber 24 is open while the packaging chamber 24 is closed only once said prefixed number of trays 4 is in proper position relative to the upper tool 21.

The apparatus 1 may also comprise a vacuum arrangement 27 connected to the packaging chamber 24 and configured for removing gas from inside said packaging chamber. The vacuum arrangement comprises at least one vacuum pump 28 and at least one evacuation pipe 29 connecting the inside of said chamber 24 to the vacuum pump. The control unit 100 controls the vacuum pump 28 to withdraw gas from said packaging chamber 24 at least when the packaging assembly is in said second operating condition, i.e. with said packaging chamber hermetically closed.

The apparatus 1 may additionally or alternatively include a controlled atmosphere arrangement 30 connected to the packaging chamber 24 and configured for injecting a gas stream into said packaging chamber; the controlled atmosphere arrangement comprises at least one injection device including an injection pump and/or one injection valve 31 acting on at least one injection pipe 32 connecting the inside of said chamber to the a source of controlled gas (not shown) which may be arranged externally to the apparatus 1. The control unit 100 may be configured to control opening and closing of the injection valve (or activation of the injection pump) 31 to inject said stream of controlled gas at least when the packaging assembly 8 is in said second operating condition, i.e. with said packaging chamber 24 hermetically closed.

The control unit 100 may also be configured to control the composition of the modified atmosphere generated inside the chamber 24. For example, the control unit 100 may regulate the composition of the gas stream injected into the packaging chamber. The gas mixtures injected into the packaging chamber to generate a modified atmosphere may vary depending upon the nature of product P. In general, mixtures of a modified atmosphere include a volumetric quantity of one or more of N₂, O₂ and CO₂ different from the quantity of these same gases as present in the atmosphere at 20°C and sea level (1 atmosphere pressure). If product P is a produce such as meat, poultry, fish, cheese, baked goods, or pasta, the following gas mixtures may be used (quantities are expressed in volume percentages at 20°C, 1 atm of pressure):
- Red meat, poultry without skin: O₂=70%, CO₂=30%
- Poultry with skin, cheese, pasta, baked goods: CO₂=50%, N₂=50%
- Fish CO₂=70%, N₂=30% or CO₂=40%, N₂=30%, O₂%=30
- Processed meat CO₂=30%, N₂=70%

According to one aspect the control unit 100 may be configured to control said injection pump or said injection valve 31 to start injecting said stream of controlled gas either after a prefixed delay from activation of said vacuum pump 28 or after a prefixed level of vacuum has been reached inside said packaging chamber 24. In a further aspect the control unit 100 may cause the start of the injection of said stream of controlled gas for creating a modified atmosphere while said vacuum pump 28 is still active so as to shorten the time for creating the modified atmosphere. It is noted, however, that high oxygen content in the gases evacuated and/or supplied or otherwise processed can entail a substantial risk of explosion in some of the components (e.g. the pump or pumps). Moreover, as it is preferable to avoid having very strong vacuum in the packaging chamber 24 and at the same time it is desirable to ensure a proper atmosphere inside the chamber it is advantageous stopping the vacuum pump after opening the gas injection. In this way the pressure inside the packaging chamber can be controlled in order to not decrease below a desired value. During the simultaneous operation of the vacuum pump 28 and the injection of said stream of controlled gas, the gas injected is mixed with residual air and the vacuum pump 28 continues to remove the mixture so that the amount of gas and/or air initially present in the packaging chamber is continually decreased. This flushing of gas and mixing of the gas and residual air is very important in order to achieve the desired controlled atmosphere in an effective and efficient manner, while ensuring that the desired pressure (i.e. level of vacuum) is achieved.

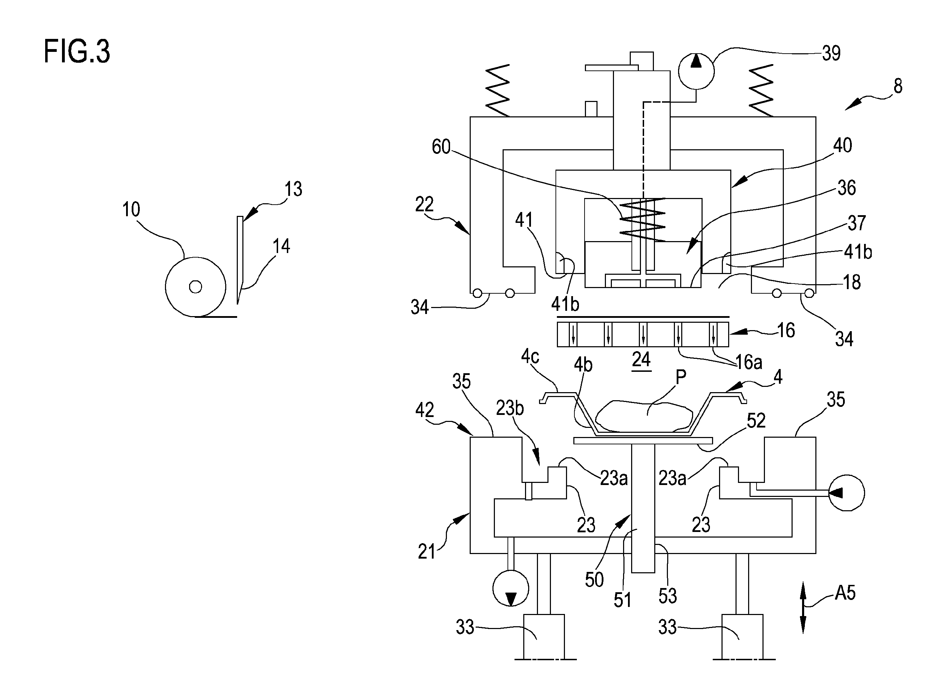

According to a further aspect, it is noted that the control unit 100 is configured to control said injection pump 31 such that
the gas flow is not injected at a speed that is too high and that may impair the firm holding of the cut film by the upper tool. The control unit 100 may control gas injection at a gas pressure set below a limit to prevent detachment of the film from the upper tool 21 or inaccurate positioning thereof in correspondence of the upper tool 21. In one example, the injection pressure is maintained between 1.3 and 4.0 bar, or preferably between 1.5 and 3.0 bar.
Note that in the examples shown, the evacuation pipe 29 and the injection pipe 32 communicate with a lower portion of the packaging chamber which is separated from an upper portion of the packaging chamber due to the presence of said inner wall or walls 23 which define a sort of separation septum. In order to allow proper circulation of gas within the entire packaging chamber the upper and lower portions of packaging chamber 24 are fluidly connected by apertures or channels located in proximity or at the inner wall 23. These apertures or channels (see e.g. FIGs. 3-5) are positioned such as not to be occluded by the tray walls when the tray is positioned in the seats 23b.

Although the apparatus 1 may have one or both the vacuum arrangement 27 and the controlled atmosphere arrangement 30, it is to be understood that the control unit 100 of the apparatus 1 may also be configured to tightly engage the film sheets 18 to the trays without activating the vacuum arrangement or the controlled atmosphere arrangement and thus leaving the normal environment atmosphere within the tray. This may be, for example, the case for non-perishable products. In another embodiment, the apparatus 1 may be designed without vacuum arrangement and without modified atmosphere arrangement. In case the apparatus is used for skin packaging after a sufficient degree of vacuum has been created in the chamber 24, the cut film sheet 18b is released by plate 36 and drapes down onto the product and onto the tray; thus, the film sheet heat seals to the top rim and to the inner surface of the tray left free by the product P.

Further, the packaging assembly can also generate a vacuum in a different manner than described above. For example, trays 4 can be provided with a hole through which any gases present within the package are removed (e.g. by means of a vacuum pump arrangement) when the film sheet 18 is placed on top rim 4c of tray 4. In skin packaging, for example, the heated film 18 can then drape down tightly around the product and adhere not only to the top rim 4c but also to portions of the side walls 4b and bottom walls 4a of tray 4 that are not covered by the product P. In other examples, any gases present within a sealed package can be removed by one or more needles penetrating the film 18 and by removing the gases present inside the package using a vacuum pump arrangement. Upon removal of the gases, the holes created by the needles can be covered, for example, by a sticker or some other form of adhesive film. It is understood that any suitable manner of providing a vacuum can be employed.

Entering now into a more detailed description of the packaging assembly 8, it should be noted that this latter further comprises a main actuator 33 active on at least one of said upper and lower tool 21 and 22. In the example of FIGs. 2-11, the first actuator 33 is carried by frame 2 and acts onto the lower tool 22 under the control of control unit 100. The main actuator 33 may include a piston (the piston may be replaced by any other kind of electric, pneumatic, or hydraulic (linear) actuator) configured for lifting and lowering the lower tool 22 along a direction transverse to said horizontal direction A1. The lower tool can be vertically lifted and lowered by main actuator 33 as indicated by the double arrow A5 shown in FIG. 1. The control unit 100 is configured for controlling the main actuator 33 and for causing movement of lower tool 22, along the prefixed main direction indicated by arrow A5, between said first operating condition (FIGs. 2 to 5), where the upper tool 21 is spaced apart from the lower tool 22 and said packaging chamber 24 is open to receive one or more of said film sheets 18, and said second operating condition (FIGs. 7 to 10), where a closure surface 34 of the upper tool 21 tightly abuts against a closure surface 35 of the lower tool 22 to hermetically close said packaging chamber 24 with respect to an atmosphere outside the apparatus. A gasket or other element for facilitating a gas tight closure may be positioned at said closure surfaces 34 and 35. As mentioned above, the control unit synchronizes opening and closing of the packaging chamber with the movement of the cut film sheet 18b from the cutting assembly to the packaging assembly.

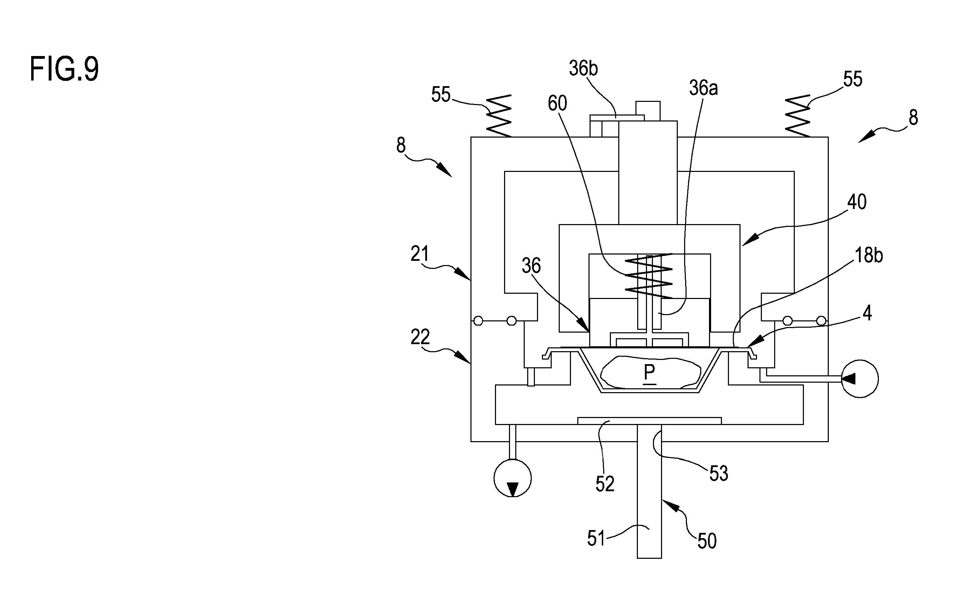

Once the chamber 24 has been closed, and after operation of the vacuum and/or controlled atmosphere arrangement, the control unit is configured to act on main actuator 33 to impose a further vertical movement to the lower tool and thus also to the upper tool as this latter abuts now against the lower tool (FIG. 9) such that the film sheet 18 is brought into contact with the rim 4c of tray 4. It is noted that elastic elements 55 may be interposed between the upper tool and the frame (such as one or more compression springs and/or one or more pneumatic actuators) to elastically push the upper tool against the lower tool.

It is also noted that at each seat 23b operates at least one inner element 50, which in the apparatus of FIGs. 1-5 and 7-11 includes a stem 51 and a terminal plate 52, configured for supporting at least the base 4a of the tray 4. The inner element is movable relative to the lower tool 22 at least along the main direction of double arrow A5 direction. In the embodiment shown (see e.g. FIG. 2) the stem 51 may slide through an opening 53 on the bottom 54 of the lower tool 22 in order to allow relative movement between said inner element 50 and lower tool 22. It is noted that the inner element may be controlled by a respective actuator (not shown) or may be directly carried by frame 2. In the examples shown, in the case where the lower tool is movable up and down as described above, the inner element 50 may remain vertically fixed at least until the terminal plate reaches bottom 54 of the lower tool (see FIGs. 7-10), in which case the inner element 50 is configured to move further up together with and, optionally, actuated by the bottom 54 of the lower tool.

In further detail, the upper tool 21 has at least one holding plate 36 having a respective active holding surface 37 configured for receiving the one or more film sheets 18 and means 38 for holding the one or more film sheets 18 in correspondence of said active holding surface 37. The means 38 for holding may comprise a vacuum source 39, e.g. in the form of a pump, controlled by the control unit 100 and connected to a plurality of suction holes 48 present in correspondence of the active holding surface 37. The control unit 100 may be configured for activating the vacuum source 39 and causing the film holding plate 36 to receive and hold said one or more film sheets 18 in correspondence of the active holding surface 37. In particular, the control unit 100 may be configured for coordinating activation of vacuum source 39 with proper positioning of the cut film sheet 18 by the backing plate 16. For example, the control unit 100 may activate the vacuum source 39 and cause the film holding plate 36 to receive and hold said one or more film sheets 18 in correspondence of the active holding surface 37, when the holding plate 36 is just above the cut film sheet. Note that in addition or in alternative to vacuum source 39 the means for holding 38 may include one or more of the following:
- mechanical holders, such as pincers, clamps or the like,
- adhesive systems, for example comprising adhesive portions associated to the active holding surface 37,
- heating systems, for example comprising heatable portions - controlled by control unit 100 - associated to the holding plate for causing heating of the active holding surface 37 and thus of the film sheet 18 in order to increase stickiness of the film sheet to the active holding surface 37,
- electric systems, for example the active holding surface 37 may be charged with a polarity different from that typical of the plastic sheet 18. In this case the control unit may be connected to a voltage generator and may control the electric charging of surface 37.

As further discussed below, when describing the operation of the apparatus 1, the control unit may be configured to create a vacuum in the packaging chamber 24 (by controlling the vacuum pump 28 to withdraw gas from said packaging chamber 24) until a pressure comprised between 100 and 300 mbar, optionally between 150 and 250 mbar, is reached. This pressure level is sufficiently low but not too low so that detachment of the film sheet from the holding plate 36 is avoided as the control unit also creates a pressure level in correspondence of the suction holes 48, by acting on vacuum source 39, below the pressure level in the packaging chamber.

As shown in FIGs. 2-5 and 7-11 the packaging assembly 8 has a sealing head 40 peripherally associated to the film holding plate 36 and having a respective heating surface 41 which extends radially outside with respect to the active holding surface 37 of the holding plate 36. In practice the holding plate 36 is sized to cover only a central portion 18a of the cut film sheet 18 while the heating surface 41 of the sealing head 40 is designed to heat a peripheral portion 18b of the cut film sheet 18 surrounding said central portion. The term "peripheral portion", as used herein, generally denotes the portion or portions of cut film sheet 18 that comprise one or more edge regions and optionally one or more corner regions, as well as some of the adjacent film material (e.g. a region including between about 3 mm to about 10 mm (preferably between about 4 mm to about 8 mm) of material around the edges of cut film sheet 18. The packaging assembly 8 and particularly the sealing head 40 is positioned and configured such that at least when the packaging assembly 8 is in said second operating condition, the heating surface 41 of the sealing head 40 faces the end surface 23a of said inner wall 23 delimiting one of said seats 23b in the lower tool 22. Note that in the example of FIGs. 2-5 and 7-11 the sealing head 40 and film holding plate 36 are initially positioned such that heating surface 41 is retracted with respect to active holding surface 37 (see FIGs. 2-5). As described, and as can be seen in particular from the series of FIGs. 9, 10, and 11, also the sealing head 40 and the holding plate 36 are relatively movable to one another along said main (vertical) direction represented by double arrow A5. In detail, the holding plate 36 is terminally carried by a shaft 36a slidably coupled relative to the sealing head 40 and having an abutting portion 36b designed to cooperate with the upper tool and with the sealing head as explained below. An elastic element 60 (which may be, e.g., a spring or a pneumatic actuator) may be interposed between the holding plate and the sealing head. The elastic element 60 allows the positioning of the holding plate 36 as shown in FIGs. 2-5 and 7-9 since the elastic element 60 tends to push the holding plate downwards (the downward stroke of the holding plate 36 relative to the sealing head 40 is limited by abutting portion 36a interfering with the sealing head 40).

In FIGs. 2-5, sealing head 40 schematically shows shaped corner regions which may be in the form recesses 41 b each defining a corresponding corner region. It is noted that different embodiments of sealing head 40 are described below, which can have any number of shaped corner regions, e.g. in the form of recesses (e.g. just one, four, or any number desired and/or required depending upon the shape of the tray to be sealed). Further, the recesses are merely schematically shown and are not intended to limit the particular shape or form of the individual corner region. As described below, there are several different embodiments of shaped corner regions possible.

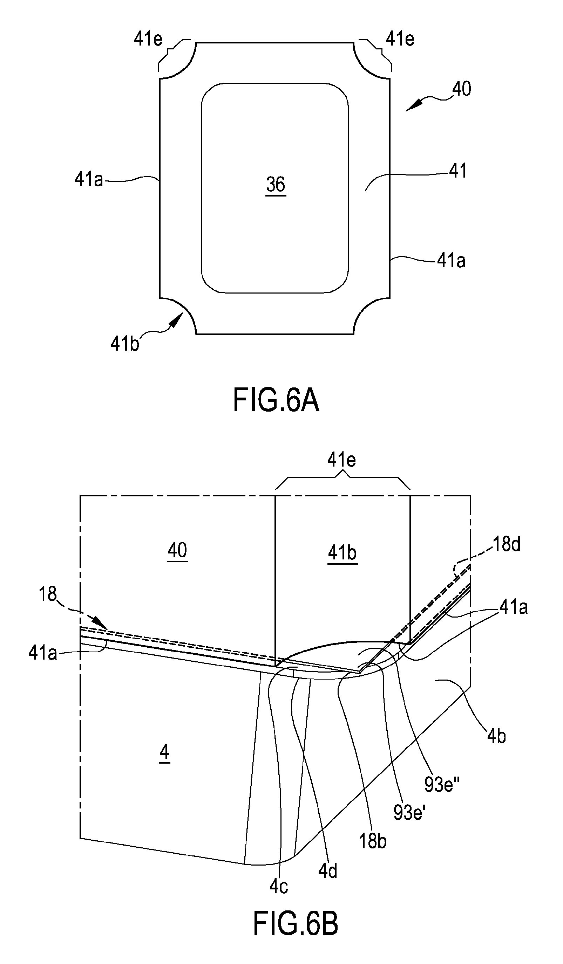

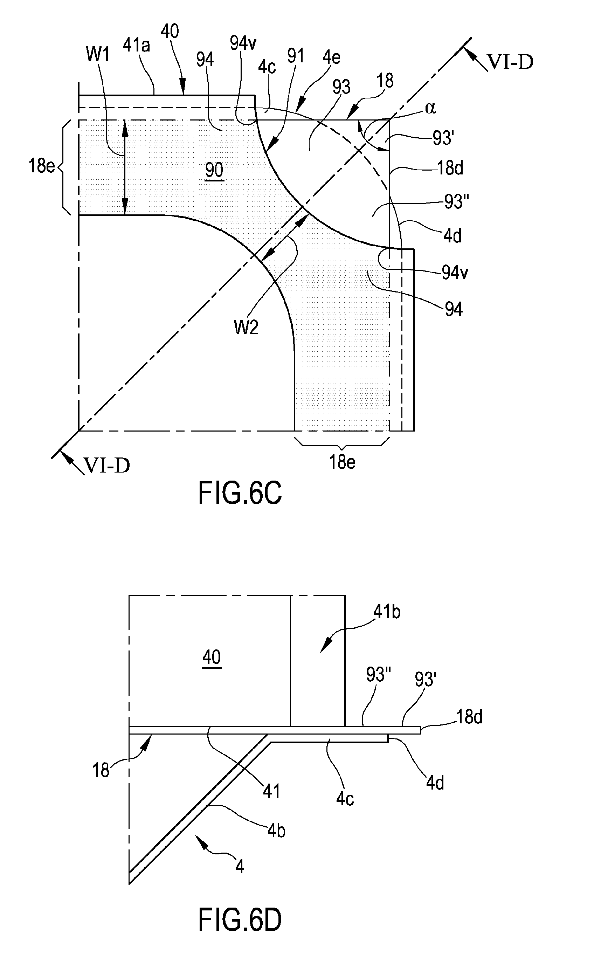

FIG. 6A shows a bottom view of a sealing head 40 having four corner regions: each corner region is defined by an appropriate corner shaping or recess 41 b. Sealing head 40 is substantially rectangular and has four corner regions as described below and as shown in FIG. 6A. In the center of sealing head 40, also holding plate 36 (including active holding surface 37) is shown, although the holding plate 36 and the active holding surface 37 are not part of the sealing head. In other examples, sealing head 40 can have any shape and/or number of corner regions as desired. FiGs. 6B and 6C show detailed views of a single corner region of sealing head 40. It is noted that, in general, sealing head 40 can comprise a number of corner regions as described in FIGs. 6B and 6C, depending on the concrete application parameters and/or on the shape of the tray 4 to be sealed. In FIG. 6A, the sealing head has four substantially identical corner regions at each of the four corners of its rectangular shape.

FIGs. 6B, 6C, and 6D respectively show a perspective view, a top view, and a cross-section view of a corner region of the sealing head 40 shown in FIG. 6A, wherein the sealing head 40 is in superimposition with a film 18 and a tray 4. Sealing head 40 comprises an active surface 41 (i.e., a lower surface of sealing head 40 in contact with film 18; see FIG. 6D) and a peripheral edge 41a extending along the outer perimeter of active surface 41. For clarity, edges and borders occluded by other elements shown in FIGs. 6B and 6C are shown as corresponding dashed lines.

The corner region of sealing head 40 is defined by a corner shaping or recess 41b, clipping from a rectangular shape of the sealing head, as seen from above (see FIG. 6A). In this embodiment, the corner shaping or recess has a substantially circular shape and "cuts" a substantially circular segment from sealing head 40 and active surface 41 thereof. As seen from above, each of the corner shaping or recesses 41 b present in sealing head 40 substantially corresponds to a quarter of circle constructed around an intersection of extensions of the elongated portions of peripheral edge 41a. As described further below, the corner shaping or recesses 41b can have different shapes, forms, and sizes. Further, there can be more than one recess present in a single corner region of sealing head 40. The underlying concepts are first explained with respect to the first embodiment shown in FIG. 6A to 6D. Further below, some examples of alternative corner regions and recesses are given.

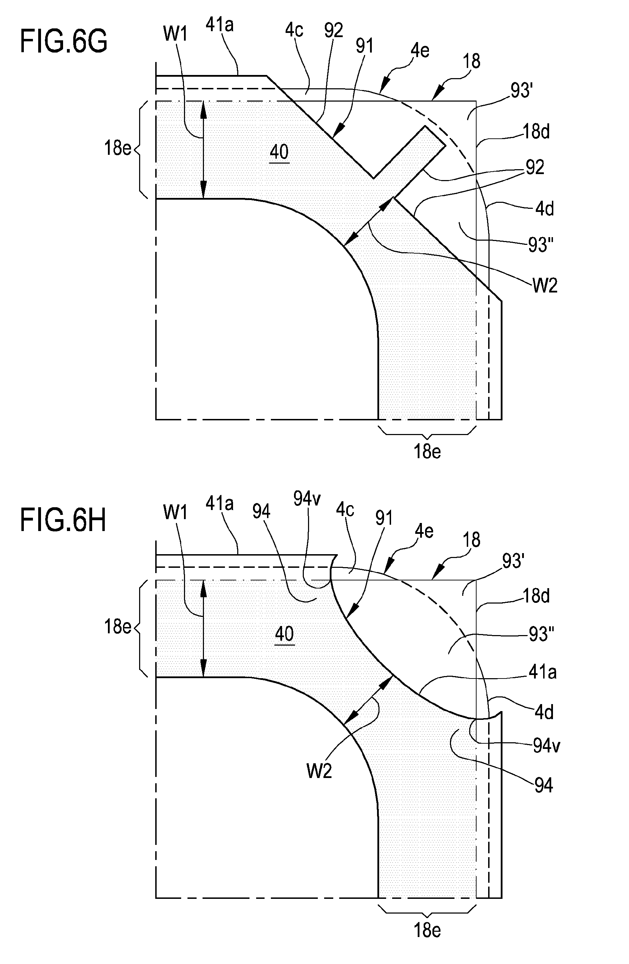

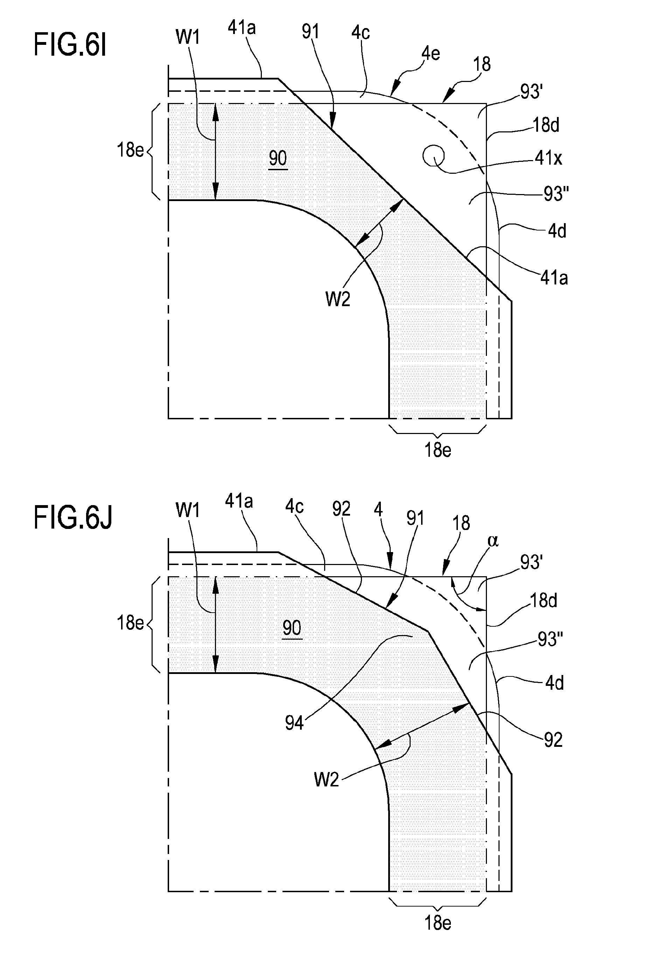

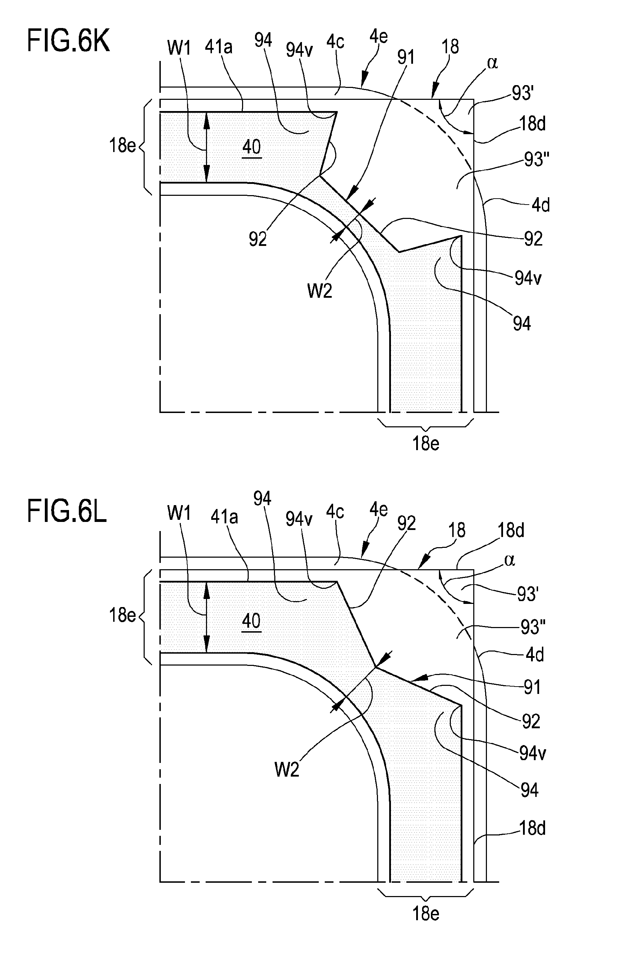

From the bottom up, the view of FIG. 6B shows tray 4, film sheet 18, and sealing head 40 substantially in superimposition with each other. Here, superimposition means that the tray 4 and film sheet 18 are arranged on top of one another such that the film sheet 18 substantially covers the top rim 4c of tray 4 wherein the peripheral border 18d is positioned to correspond as closely as possible to the peripheral rim edge 4d of the top rim 4c of tray 4. As desired, the film sheet 18 can have a shape and size largely corresponding to that of tray 4, wherein the film sheet 18 is generally sized such that a (pointy) corner flap 93 of the film extends beyond a (rounded) corner portion of tray 4 and elongated sections of the peripheral border 18d of film sheet 18 are substantially in superimposition with corresponding elongated sections of peripheral rim edge 4d of top rim 4c of tray 4. As can be seen from FIG. 6B, the recess 41 b is configured to not cover the corner flap of film sheet 18, thereby defining the corner flap 93 which may present one or preferably two distinct portions, namely a first portion 93' extending outside the peripheral rim edge 4d of top rim 4c of tray 4, and a second portion 93" extending inside the peripheral rim edge 4d of top rim 4c of tray 4. More in detail, due to the shape of the head active surface, the plastic film sheet (which is made in a heat sealable material or at least comprises a surface layer facing the top rim made in a heat sealable material) is sealedly attached and heat bonded to the tray top rim 4c by a seal 90 circumferentially extending between the peripheral portion 18b and the top rim 4c of the tray 4, thereby sealing an inside of the package from an outside thereof. In figures 6C, 6G, 6H, 6I, 6K, 6J, 6L, the area covered by seal 90 is marked with a rendering in order to differentiate it from the head 40, the tray 4 and the film sheet 18.

In correspondence of the at least one tray corner region 4e, the outward edge 91 of the seal 90 forms at least one welding line 92 having shape different from the shape of the peripheral rim edge 4d and delimits - in cooperation with the peripheral portion 18b of the film sheet 18 - at least one portion 93" of the corner flap 93; this portion of the corner flap 93 overlaps the top rim (4c) and is not heat sealed to the same top rim.

In those cases, as in the examples shown in the drawings, where the film sheet protrudes out of the top rim at one or more corner regions, the whole corner flap 93 (including first and second portions 93' and 93") is not covered by sealing head 40 and will not be sealed to top rim 4c of tray 4 upon sealing by means of sealing head 40. This provides corner flap with a first (optional) portion 93' that can be gripped, for example, by hand, thereby facilitating a firm hold on film sheet 18, and with a second portion 93" that enables a user gripping the corner flap to pull the corner flap away from tray 4 without immediately having to overcome the adhesive force presented by the seal between film 18 and tray 4 when trying to open the package comprising film sheet 18 and tray 4.

The seal 90 comprises plastic material of the film peripheral portion 18b and/or of the tray top rim 4c: in other words the heat seal 90 is formed by the softened or molten material coming from the film sheet or the tray top rim and extends all around the tray mouth to form an hermetical closure of the tray. According to one aspect, the seal 90 at the corner region 4e is configured to define one or more welding lines shaped and positioned such as to stiffen and keep flat said film flap 93. In other words the shape and position of the welding lines promotes a stiffening and flattening of the corner flap 93, which otherwise may tend to curl.

In practice, in certain embodiments (see figures 6C, 6H, 6K, 6L), the welding line 92 may form a line which has a concavity facing the corner flap 93 and defines at least two wedge shaped portions 94 of the seal 90. Each wedge shaped portion has a vertex of an angle of less than 135°. The wedge shaped portions 94 create pointed projections directed to the corner flap and symmetrically positioned with respect to an axis of symmetry bisecting the corner flap and in particular bisecting a tip angle (α) of the corner flap.

Alternatively (see figure 6J), the welding line 92 may have a concavity facing away from the corner flap 93 and define at least one wedge shaped portion 94 of the seal 90 having a vertex of an angle of more than 135°. In this case, the wedge shaped portion is centrally positioned with respect to the corner flap, directed to the tip of the same, and symmetrically positioned with respect to an axis of symmetry bisecting the corner flap and in particular bisecting a tip angle (α) of the same corner flap.

Going now into further detail, and referring to specific non limiting examples, it is noted that FIG. 6C shows a top view of the corner region and FIG. 6D shows a cross-section view of the corner region taken along the dashed line VI-D as shown in FIG. 6C. The top view of FIG. 6C shows how the corner flap 93 is defined by the recess 41b as it provides for a delimitation between the seal 90 to be created between film sheet 18 and top rim 4c of tray 4 (the portion of film sheet 18 and top rim 4c in contact with - i.e. covered and in superimposition with-active surface 41) and a portion of film sheet 18 outside of sealing head 40. Further, the top view of FIG. 6C shows how the corner flap 93 may comprise the first portion 93', extending outside the peripheral rim edge 4d of top rim 4c of tray 4, and the second portion 93", extending inside the peripheral rim edge 4d of top rim 4c of tray 4. The cross-section view of FIG. 6D shows the cross-section of tray 4 at the bottom having the film sheet 18 on top, positioned between the top rim 4c of tray 4 and the sealing head 40, which is positioned atop film sheet 18. Part of recess 41b of sealing head 40 is also shown, as well as peripheral rim edge 4d and peripheral border 18d of film sheet 18.

It is noted that, in FIG. 6C, the intersection of the head peripheral edge 41a with the peripheral border 18d of film 18 defines the wedge shaped portions 94 providing the corner flap with stability in order to prevent folding of the material of film sheet 18 at the corner region 4e of tray 4. The wedge shaped portions 94 are generally comprised at an outward edge of the seal created by the sealing head 40 between film 18 and top rim 4c of tray 4. The seal can extend, as shown in FIG. 6C, fully to the peripheral border 18d of film 18, thereby defining wedge shaped portions at the peripheral border 18b of film 18. In other embodiments detailed below, the seal does not extend fully to the peripheral border 18b of film 18, in which case the respective shape of the head corner region 41e defines the wedge shaped portions 94 within the peripheral region 18e of film 18. It has been found that the placement of two wedge shaped portions 94 at the end of the concave welding line defining in FIG. 6C the outward edge 91 of the seal 90 form stiffening elements which prevent unwanted folding of the corner flap, in particular when using very thin plastic films.

FIGs. 6B, 6C, and 6D show the configuration of sealing head 40 and the spatial relationship between the sealing head 40, film sheet 18, and tray 4 when the sealing of tray 4 takes place. As can be seen from FIG. 6A, sealing head 40 also has an inner edge extending on an opposite side of peripheral edge 41a with respect to active surface 41. Generally, active surface 41 is a substantially planar and continuous surface (in some examples described further below, active surface 41 can comprise, in addition, co-planar auxiliary surfaces extending from or even disconnected from active surface 41). It is noted that, for example for skin packaging, sealing head 40 and holding plate 36 can be a one-piece element, where the sealing head does not exhibit a center opening where a separately operable holding plate is positioned. A second embodiment of the packaging apparatus directed at skin packaging is described further below.

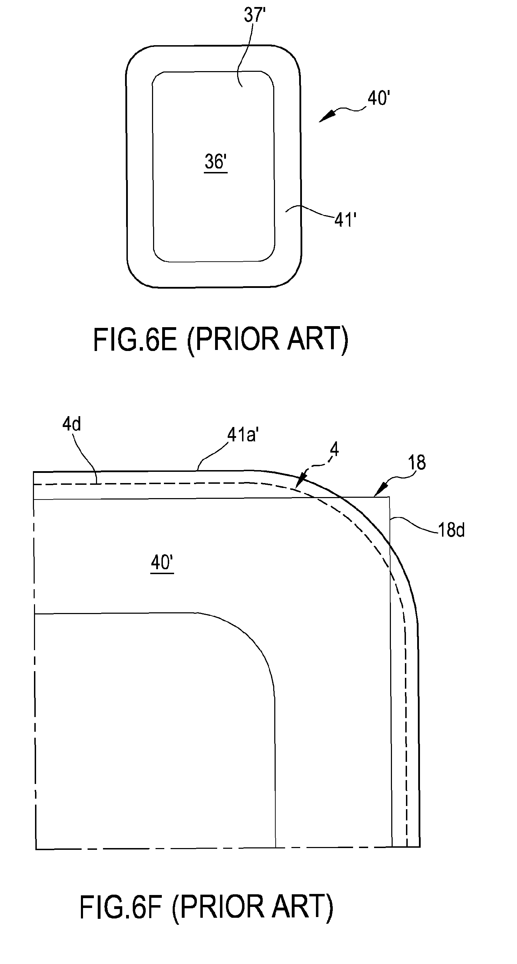

FIG. 6E shows a bottom view of prior art a sealing head 40' as a comparative example. Here, sealing head 40' has rounded corner regions substantially corresponding to the shape of the rounded corners of tray 4. FIG. 6F shows a top view of a corner region of the prior art sealing head shown in FIG. 6E as a comparative example. As can be seen from FIG. 6F, the shape and size of active surface 41' of sealing head 40' substantially corresponds to and, optionally slightly overlaps the top rim 4c of tray 4, so that upon sealing of film sheet 18 to top rim 4c of tray 4, a peripheral portion of film sheet 18 basically is sealed to the entire top rim 4c of tray 4. The only portion of film sheet 18 not sealed to tray 4 is the pointy portion of film sheet 18 extending beyond the rounded corner region of tray 4. It is noted that film 18 can also extend slightly beyond the seal in cases where the seal does not extend completely to the edge of top rim 4c (e.g., when the sealing head does not extend beyond the top rim 4c), thereby leaving a comparably small outer portion of the peripheral portion 18e of film 18 unsealed. However, such an outer portion is much smaller than the above-discussed corner flap and generally does not facilitate opening of the package by removal of the film, due to its small size that generally does not allow for a user to grab hold of the film 18.

FIGs. 6G to 6L each respectively show a top view of a corner region 41e of a sealing head 40 in superimposition with a film 18 and a tray 4, wherein different shapes of the sealing head and of the seal are illustrated.

FIG. 6G shows a top view of a head corner region 41e having a substantially linear shape with a projection extending substantially perpendicularly from the linear section defining the head corner region 41e. As shown, the head peripheral edge 41a follows the linear section and the contour of the projection around sealing head 40 and head corner region 41e. Thus also in the case of FIG. 6G, the seal 90 has an outward edge 91 formed by a plurality of welding lines 92 forming a polygonal. By virtue of the projection in the head corner region 41e, the seal 90 is formed to comprise, in correspondence of the at least one tray corner region 4e, an auxiliary seal section having the shape of a narrow strip extending transversally to the rest of the seal 90: in the example of

FIG. 6G the strip is rectangular and emerges perpendicularly from the rest of the seal 90 and is symmetrically positioned with respect to the axis of symmetry of the corner flap 93. This auxiliary seal section is configured to seal a central portion of the corner flap, in particular of the second corner flap portion 93e" of the corner flap 93, to the top rim (4c) of the tray (4), suc as to reduce or avoid any tendency of the film to curl or bend. As described with respect to FIGs. 6B, 6C, and 6D, the corner flap comprises first 93' and second 93" portions, wherein the first portion 93' extends beyond the top rim 4c of tray 4 and the second portion 93" is delimited by outward edge of the seal (i.e. by the head peripheral edge 41 a during formation of the package), separating the unsealed corner flap from the circumferentially extending seal 90 along the top rim 4c of tray 4.. It is noted that the concept of the projection (and corresponding auxiliary seal section) is applicable to the other shapes of the head corner region 41e as described with respect to the other embodiments.

FIG. 6H shows a top view of a head corner region 41e having a substantially elliptic shape. The shape shown in FIG. 6H is similar to the shape illustrated in FIGs. 6B to 6D, with the exception of the general shape not being circular but elliptic. Similar to the embodiments shown and described above, the concave and curved section of head peripheral edge 41a provides the seal with wedge shaped portions 94 providing the corner flap with stability in order to prevent folding of the material of film sheet 18 at the corner region 4e of tray 4. As described with respect to FIGs. 6B, 6C, and 6D, the corner flap comprises first 93' and second 93" portions, wherein the first portion 93' extends beyond the top rim 4c of tray 4 and the second portion 93" is delimited by the welding lines 92 formed by the head peripheral edge 41 a, separating the unsealed corner flap from the circumferentially extending seal along the top rim 4c of tray 4.

FIG. 6I shows a top view of a head corner region 41e having a substantially linear shape having a linear section defining the head corner region 41e.. As described with respect to FIGs. 6B, 6C, and 6D, the corner flap comprises first 93' and second 93" portions, wherein the first portion 93' extends beyond the top rim 4c of tray 4 and the second portion 93" is delimited by the outward edge 91 or the seal 90 formed by the head peripheral edge 41 a, separating the unsealed corner flap from the circumferentially extending seal 90 along the top rim 4c of tray 4. In this case the outward edge 91 is formed by a single straight welding line. The head corner region 41e is provided with an extension (of course more than one extension may be present) defining at least one auxiliary active surface 41x, the auxiliary surface 41x being co-planar with but having no direct connection in the same plane as active surface 41. The auxiliary surface 41x provides the seal 90 with at least one disconnected auxiliary corner portion (e.g. in the shape of a relatively small circular or square or otherwise shaped spot) that facilitates additional adhesion (by heat sealing) of the corner flap to the top rim 4c of tray 4. It is noted that the concept of the auxiliary surface 41x creating a disconnected auxiliary corner portion of the seal is applicable to the other shapes of the head corner region 41e as described with respect to the other embodiments.

FIG. 6J shows a top view of a head corner region 41e having a substantially polygonal shape having two linear sections defining the head corner region 41e. The two linear sections comprise an intermediate vertex connecting the linear segments in a substantially symmetrical manner. Thus, the outward edge 91 of the seal 90 is in this case a polygonal, formed by at least two welding lines, with concavity facing away from the corner flap 93 and with one wedge shaped portion 94 pointing towards the center of the corner flap and symmetrically positioned with respect to a line bisecting a tip angle (α) of the corner flap. As described with respect to FIGs. 6B, 6C, and 6D, the corner flap comprises first 93' and second 93" portions, wherein the first portion 93' extends beyond the top rim 4c of tray 4 and the second portion 93" is delimited by the head peripheral edge 41a, separating the unsealed corner flap from the circumferentially extending seal along the top rim 4c of tray 4. It is noted that where sealing head 40 extends beyond the peripheral border 18d of film 18, the seal is provided the wedge shaped section providing the corner flap with stability in order to prevent folding of the material of film sheet 18 at the corner region 4e of tray 4.

FIGs. 6K and 6L show embodiments of a head corner region 41e, in which the sealing head does not extend beyond the peripheral border 18d of film 18 or beyond the peripheral rim edge 4d of tray 4, but is entirely positioned within the aforementioned border 18d and edge 4d, when configured to seal the film 18 to tray 4. In both embodiments, the sealing head 40 has, in correspondence of the head corner region 41e, a polygonal shape configured to provide the film 18 and tray 4 with an outward edge 91 of seal 90 having a corresponding polygonal shape formed by a plurality of consecutive welding lines. It is noted that in a manner similar to that described above with respect to FIGs. 6B, 6C, and 6H, the sealing head 40 provides the seal 90 with wedge shaped sections providing the corner flap with stability in order to prevent folding of the material of film sheet 18 at the corner region 4e of tray 4. In the embodiments shown in FIGs. 6K and 6L, three welding lines 92 form an outward edge 91 of the seal having concavity facing the corner flap 93, with two wedge shaped portions 94 pointing towards opposite sides of the corner flap and symmetrically positioned with respect to a line bisecting a tip angle α of the corner flap; the wedge shaped sections are not reaching the peripheral border 18d of film 18, but are comprised in the peripheral region 18e of film 18. It is noted that the corner flap is substantially delimited by the outward edge 91 defined by the peripheral rim edge 41a in correspondence of the head corner region 41e, although a circumferentially extending small unsealed portion of film 18 is present all around tray 4. The presence of wedge shaped sections as well as the first 93' and second 93" portions of the corner flap being substantially larger than the remaining unsealed portion around film 18 provide the corner flap with properties substantially corresponding to those described above with respect to FIGs. 6B to 6D and 6G to 6J.

Where in the description of the above embodiments symmetry has been mentioned for the position of the wedge shaped portions 94 and auxiliary section(s) it is noted that perfect symmetry is not strictly required and the number and placement of the mentioned portions and sections may also be slightly different from what described.

As explained above in connection with all described embodiments, and as it is visible in the attached figures, the size (in term of measure of the top surface area) of the second flap portion 93" is relatively big and may at least 50% or equal to or greater than the size of the first flap portion 93'. In a first practical example the size of the second flap portion 93" is at least 200% of the size of the first flap portion 93'. In a second practical example the size of the second flap portion 93" is at least 300% of the size of the first flap portion 93'. Moreover, it is noted that the particular configuration of the sealing head 40 provides the seal with a first width along a majority of the peripheral portion 18b of the film 18 and with a second width in correspondence of the at least one head corner region 41 e, wherein the second width is less than the first width. The first width is substantially constant along the entire peripheral portion 18b while the second width may be variable (see the seal width at the corner regions 41e): in particular the second width may present a minimum which may be less than 50% of the first width. Thus, the seal may have a first width W1 along a majority of the peripheral portion 18b of the film sheet 18 and a second width W2 in correspondence of the at least one tray corner region 4e, the second width being less (e.g. 50% or even less) than the first width.

It is noted that the above-described embodiments of the shape of the head corner region 41e merely serve as examples of a broader range of shapes substantially providing the same or similar effect.

The control unit 100 is connected to the sealing head 40 and configured for controlling heating of the sealing head 40 such that the active surface 41 is brought at least to a first temperature (selected based on the materials used for the film sheet 18 and the tray 4 to be adequate for sealing at least the peripheral portion of the cut film sheet to the top rim 4c of tray 4).

It is noted that according to a variant, second heating means may also be integrated in the film holding plate 36 which may be configured to heat the active holding surface 37 such a way to bring it at least to a second temperature. The heating means can be connected with the control unit 100 and the control unit be configured for controlling the heating means such that the active holding surface 37 of the film holding plate 36 is brought at least to said second temperature. Depending upon the circumstances the first and second temperatures may be equal or different.

Advantageously, the control unit 100 is configured for independently controlling the first (and second, if present) heating means and the sealing head 40 and to independently set the first (and second) temperatures. In this way, the control unit 100 may allow an operator to properly set the temperature of the heated parts of the upper tool 21 (active holding surface 37 and active surface 41). The management of these temperatures by the control unit 100 allows to improve the bond between film sheet 18 and tray 4. In particular: the control unit 100 may be configured to control the first and second temperatures as follows:
- in case of shrinkable films 10 being used, then the control unit may only cause heating of the active surface 41, optionally only when this latter is pressed against the top rim 4c of tray 4,
- in case of non heat shrinkable films 10 being used, then the control unit may cause heating of the entire film sheet with the first and second temperatures being e.g. equal,
- in case of skin packaging, the control unit may cause heating of the entire film sheet, e.g. with the second temperature being higher than the first temperature.

From a constructional point of view, the sealing head 40 may include a metallic body embedding at least one resistive and/or inductive element connected to a power supply; in this case the control unit 100 is configured for controlling the power supply to continuously supply current to the resistive or inductive element such as to keep the temperature of the active surface 41 within a prefixed range around said first temperature.

In addition to or independent from the above, the sealing head 40 may include at least one metallic wire directly carried by the active surface 41 of the sealing head 40; the metallic wire is connected to a power supply and to the control unit 100 which is configured for controlling the power supply to supply current to the metallic wire during discrete time intervals. In practice, the thermal inertia of the wire is so small that the control unit may be programmed cause the power supply to provide current for short time intervals, for example when sealing of the film sheet 18 to the top rim 4c of tray 4 needs to take place. During the rest of the cycle described above, the power supply does not feed current to the wire, which can basically be kept at around ambient temperature. This is useful when dealing with shrinkable films.

Alternatively or in addition to the above, the sealing head 40 may include a printed circuit formed onto said active surface 41 of the sealing head 40. The printed circuit is connected to a power supply and to the control unit 100 which is configured for controlling the power supply to supply current to the printed circuit for short time intervals, for example when sealing of the film sheet 18 to the top rim 4c of tray 4 needs to take place. During the rest of the cycle described above, the power supply does not feed current to the wire, which can basically be kept at around ambient temperature. This is useful when dealing with shrinkable films.

As to the heating means that may be associated to the holding plate 36, also these heating means may include at least one resistive and/or inductive element embedded in the body of the holding plate and connected to a power supply. In this case, the control unit 100 is configured for controlling the power supply to provide an electric current to the resistive or inductive element such as to keep the temperature of the active holding surface 37 of the holding plate 36 within a prefixed range around said second temperature.

In addition to or independent from the above, the holding plate may include at least one metallic wire directly carried by the active holding surface 37 of the holding plate 36 and connected to a power supply and to the control unit 100 which is configured for controlling the power supply to supply current to the metallic wire during discrete time intervals. In practice the thermal inertia of the wire is so small that the control unit may be programmed to cause the power supply to provide current for short time. During the rest of the cycle described above, the power supply does not feed current to the wire, which can basically be kept at around ambient temperature.

Alternatively or in addition to the above, the heating means may include a printed circuit formed onto said active holding surface 37 of the holding plate 36 and connected to a power supply and to the control unit 100, which is configured for controlling the power supply to supply current to the printed circuit for short time intervals. During the rest of the cycle described above, the power supply does not feed current to the printed circuit, which can basically be kept at around ambient temperature.

It is noted that, when the film is heat shrinkable, using the heating means may serve to increase tension in the central portion of the film 18, after having fixed the peripheral portion of the film sheet 18 to the top rim 4c.

As a further variant, an ultrasound generator may be used in place of or in addition to the sealing head and/or heating means. The ultrasound generator, if present, is configured to convey pressure energy (in the form of high frequency acoustic waves) in correspondence of the area occupied by the peripheral surface 18b of the film sheet 18 and by the top rim 4c of tray 4. The control unit may be programmed to control the ultrasound generator to cause emission of acoustic waves at least when the film sheet and the tray 4 are brought in mutual contact as shown in FIG. 7.

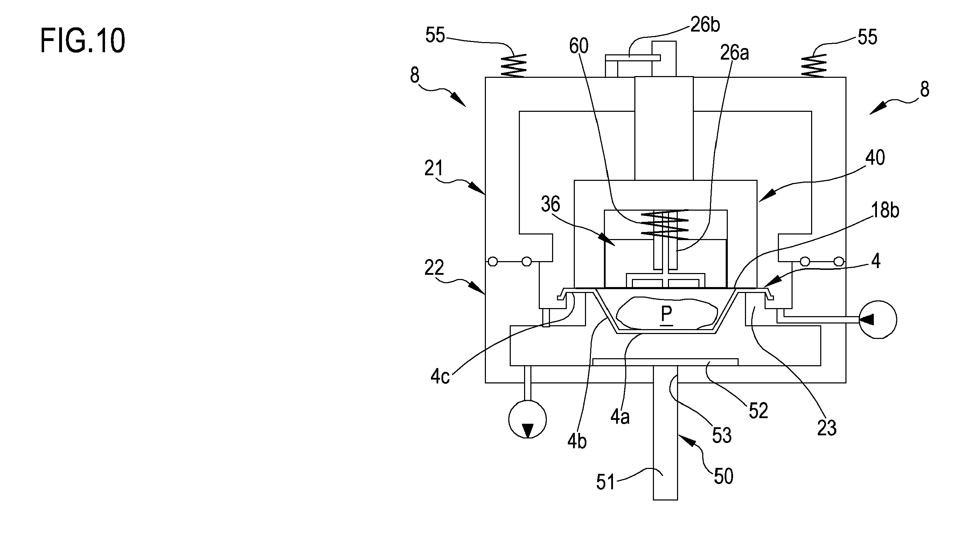

As another variant, a generator of electromagnetic waves may be used in place of or in addition to the sealing head and/or heating means. The electromagnetic generator, if present, is configured to focus electromagnetic energy (in the form of high frequency electromagnetic waves) in correspondence of the area occupied by the peripheral surface 18b of the film sheet 18 and by the rim 4c of tray 4. The control unit may be programmed to control the generator to cause emission of electromagnetic waves at least when the film sheet and the tray 4 are brought in mutual contact as shown in FIG. 10.

In view of the above structural description of the first embodiment of apparatus 1 here below operation of the first embodiment is disclosed. The operation takes place under control of control unit 100 and achieves a process of packaging a product in a tray. In this case the described process allows packaging under modified atmosphere. In any case the apparatus 1 is also capable of making a skin packaging of the product. Moreover, the apparatus 1 may be used for applying a lid to a tray and thus packaging in normal ambient atmosphere.

The trays are progressively moved to the packaging assembly 8 by transport assembly 3. At the same time the pinch rolls allow unrolling of film from roll 10 and the cutting assembly prepares the cut film sheets in number and size corresponding, preferably, exactly to the trays to be closed. It is noted that the film sheets can correspond largely to an area delimited by the top rim 4c of a tray while providing, at corresponding one or more corner regions 4e of the tray 4, one or more corner flaps as described herein, wherein a portion of the respective film sheet 18 may extend beyond the peripheral rim edge 4d of the respective tray 4 in correspondence of the one or more corner regions 4e of the tray 4. In practice, the film sheets 18 may be cut to a size copying that of the outer border of the rim 4c or they may be cut to a size radially smaller than the outer edge of rim 4c but sufficient to tightly close the mouth of the tray 4 and sealingly engage the rim 4c top surface, while still providing the above-mentioned corner flap or flaps. In some examples, the cut film sheets can further be somewhat larger than required to cover the entire rim 4c, thereby allowing for some excess material extending beyond the rim 4c. In some examples, this can reduce the requirements with respect to the accuracy of placement of the cut film sheets onto trays 4. It is noted that film 18 can also extend slightly beyond the seal in cases where the seal does not extend completely to the edge of top rim 4c (e.g., when the sealing head does not extend beyond the top rim 4c), thereby leaving a comparably small outer portion of the peripheral portion 18e of film 18 unsealed. However, such an outer portion is much smaller than the above-discussed corner flap and generally does not facilitate opening of the package by removal of the film, due to its small size that generally does not allow for a user to grab hold of the film 18.

In the apparatus 1 of FIGs. 2-5 and 7-11 the packaging assembly includes, as described above, a main actuator 33. In the embodiment shown, the main actuator is carried by frame 2 and acts on lower tool 22 under the control of control unit 100 for lifting and lowering the lower tool 22 along main direction A5, which is typically vertical.

FIG. 2 shows a prepared cut film sheet 18 ready to be transported to the sealing assembly or to be picked up by the upper tool. In this example, a backing plate picks up and moves the film 18 towards chamber 24.

In FIG. 3, backing plate 16 has been moved into the space between the upper 21 and lower 22 tools (i.e. into chamber 24), in particular directly below holding plate 36 and directly above and in superimposition with tray 4. In this embodiment, the tray 4 carrying the product to be packaged is already present within chamber 24. However, it is understood that the movement of the tray 4 and that of the cut film sheet 18 into chamber 24 can be performed sequentially in any order or, preferably, at the same time. At this stage, the vacuum holding means 16a are still being supplied with a vacuum, thereby holding cut film sheet 18 into place.

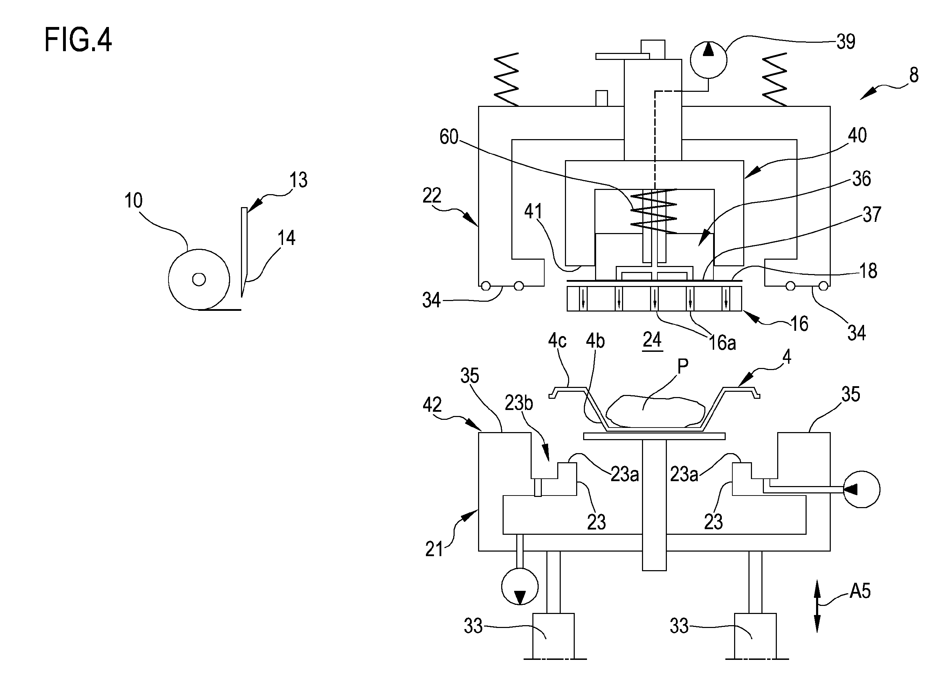

In FIG. 4, backing plate 16 is raised toward holding plate 36 such that the cut film sheet 18 is substantially in the proximity of or in contact with the active holding surface 37 of holding plate 36. As shown in FIG. 3, backing plate 16 still holds the cut film sheet 18 in place.

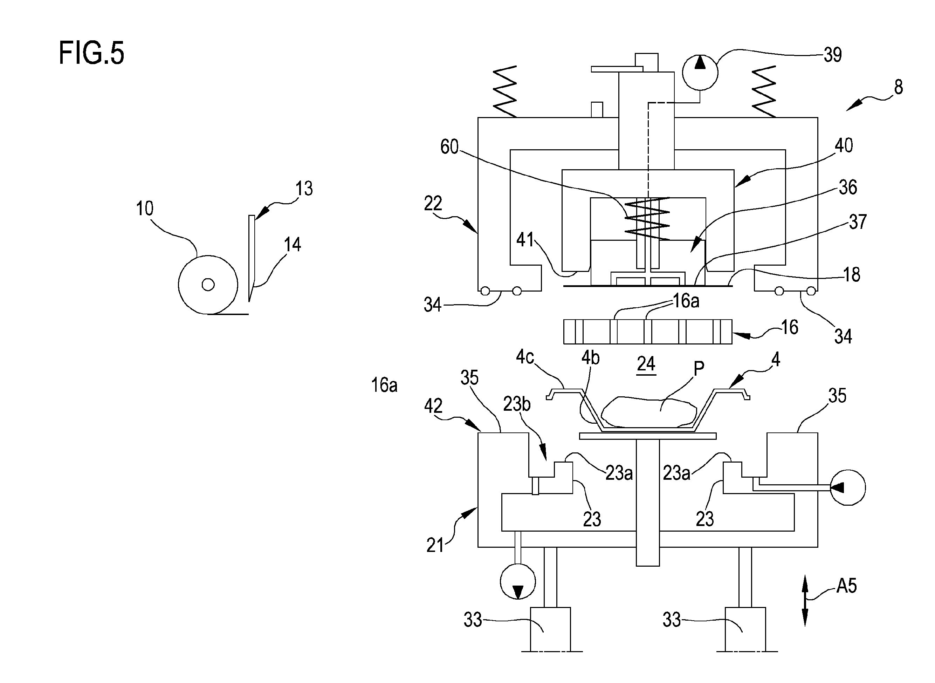

In FIG. 5, the vacuum holding means 16a of backing plate 16 are deactivated and the holding means 48 of holding plate 36 are activated. Subsequently, backing plate 16 is moved away from holding plate 36. Due to the switch in holding, the cut film sheet 18 is now held by holding plate 36 and backing plate 16 can be entirely retracted from the space between the upper 21 and lower 22 tools.

After the cut film sheet 18 has been moved into the packaging chamber 24 and the holding plate 36 has received the cut film sheet (see FIGs. 2 to 5), the control unit 100 controls the main actuator 33 to close the packaging chamber 24 (see FIG. 7) by lifting the lower tool 22 such that inner wall 33 intercepts the tray 4 which is lifted and separated from inner element 50.

It is also noted that during the phases depicted in FIGs. 2 to 5 the abutting portion 36b interferes with a part integral with the sealing head so that the elastic bias exerted by element 60 may cause only a limited relative downward stroke of the holding plate relative to the sealing head. At this point, the packaging chamber is hermetically closed and film sheet 18 is held by holding plate 36 at a certain distance from the mouth of the tray 4. As shown in FIG. 7 the vacuum arrangement is activated and a certain degree of vacuum is created.

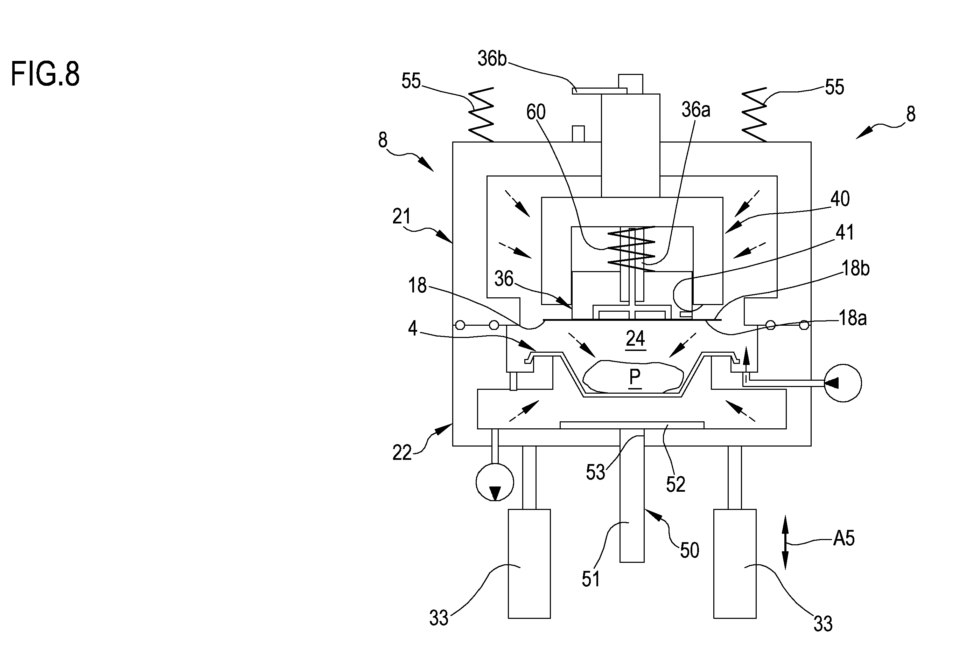

Then, immediately after or, with a certain temporal overlap during vacuum creation, the controlled atmosphere arrangement may be actuated (see FIG. 8) and a controlled atmosphere may be created inside the packaging chamber. In certain variants only the vacuum arrangement or only the controlled atmosphere arrangement may be actuated. It is noted that in case it is desired to operate the apparatus 1 to simply apply a lid to a tray 4, then the vacuum arrangement and the modified atmosphere arrangement may not be activated at all.

A further vertical movement imposed onto the lower tool 22 by main actuator 33 wins the reaction of the elastic elements 55 (see FIG. 9) and brings the film sheet held by holding plate into contact with the rim 4c of the tray 4. In this position, the upper tool 21 interacts with the abutment portion 36b. In the example of FIGs. 2-5 and 7-11 a protrusion 21a fixed to the upper tool touches the abutting portion 36b so that further vertical movement of the lower tool would cause vertical movement of the upper tool, of the abutting portion 36b and thus of the holding plate 36.

The control unit 10 is then configured to operate the main actuator 33 to further lift the lower tool 22, winning the reaction of elastic element 60 and thus causing the holding plate 36 to lift and the active holding surface 37 and active surface 41 to align with each other (FIG. 10).

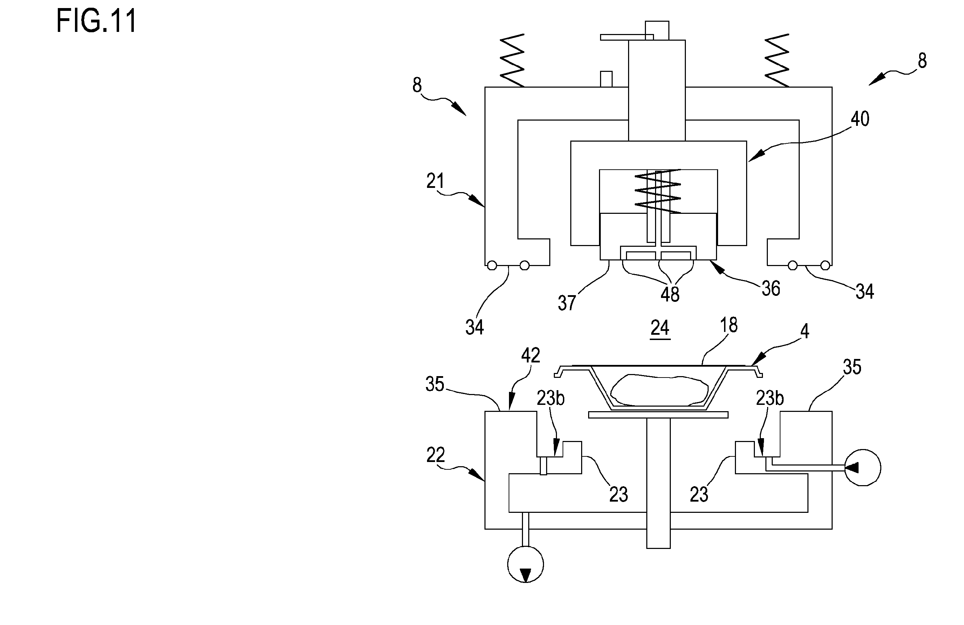

At this point, when the active surface 41 of the sealing head 40 contacts the peripheral portion 18b of the film sheet 18 positioned above a tray 4, the control unit 100 causes heating of the sealing head 40 such that the active surface 41 at least partially fuses plastic material of the peripheral portion 18b of the film sheet 18 and/or of the top rim 4c, thereby sealing the cut film sheet 18 to the tray 4. The control unit 100 then lowers the lower tool 22, and thus opens the packaging chamber 24 to allow the tray to proceed in a direction downstream of the packaging assembly (see FIG. 11). The cycle may then be repeated. In an alternative to a controlled heating of the active surface 41, the temperature of the active surface can be kept constant, such that sealing upon contact of the active surface 41 and the film sheet 18 is achieved.

### Second embodiment of apparatus 1

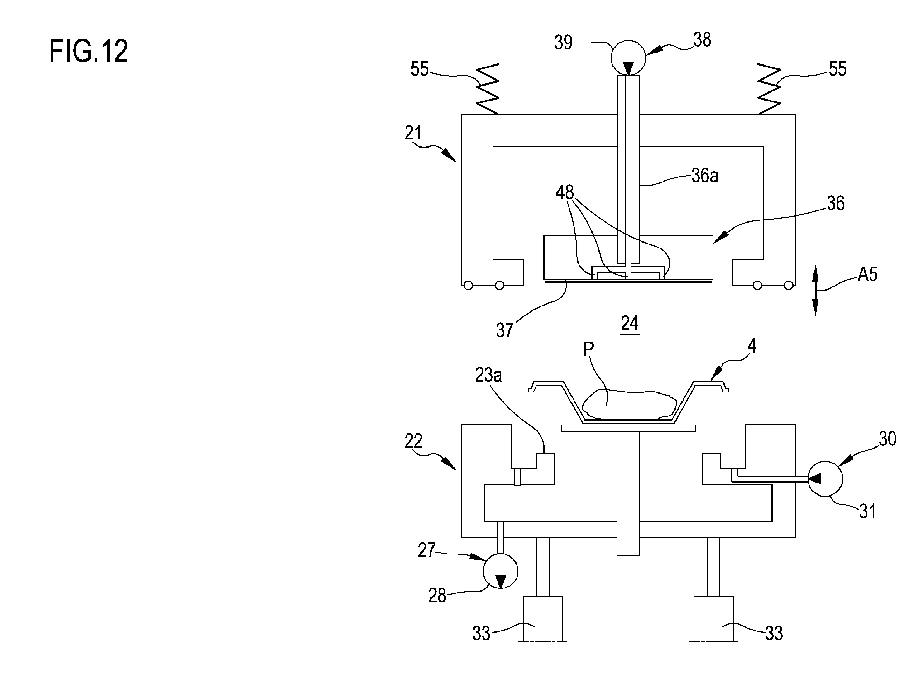

In FIGs. 12-16, a second embodiment of apparatus 1 is shown. For sake of conciseness only the aspects and components of this second embodiment differing from those of the first embodiment will be described. Remaining aspects and components are substantially the same as in the first embodiment and have been identified with same reference numerals. It is noted that the sealing head 40 and the holding plate 36 are combined into an integrated element, wherein the sealing head 40 and the holding plate 36 are no longer movable with respect to each other. In the following, the integrated element will be referred to as sealing head 40 and will incorporate the components and functionality of the holding plate 36.

In some examples, active surface 41 can comprise active holding surface 37 (e.g. when active surface 41 and active holding surface 37 have substantially the same plane). The heating means can be connected with the control unit 100 and the control unit can be configured for controlling the heating means such that the active surface 41 is brought to the desired temperature. The heating means may be of the type described for the first embodiment.

The differences with respect to the first embodiment concern the packaging assembly. In the case of FIGs. 12-16 the upper tool 21 has at least one sealing head 40 having a respective combined active surface 41. An inner portion 37 of active surface 41 serves as a holding surface as described above with respect to the first embodiment. The sealing head 40 is terminally carried by shaft 36a and covers the entire radial span of the end surface 23a and thus also of rim 4c. The sealing head shaft is coupled to the upper tool 21 to allow at least movement along direction of double arrow A5 as described below. The means for holding 38 may comprise a vacuum source 39, e.g. in the form of a pump, controlled by the control unit 100 and connected to a plurality of suction holes 48 present in correspondence of the inner portion 37 of active surface 41. It is noted that in addition or in alternative to vacuum source 39 the means for holding 38 may include one or more of the following:
- mechanical holders, such as pincers, clamps or the like,
- adhesive systems, for instance comprising adhesive portions associated to the inner portion 37 of active surface 41,
- heating systems, for instance comprising heatable portions associated to the holding plate for causing heating of the inner portion 37 of active surface 41 and thus of the film sheet 18 in order to increase stickiness of the film sheet to the inner portion 37 of active surface 41,
- electrostatic systems, for instance the inner portion 37 of active surface 41 may be charged with a polarity different from that typical of the plastic sheet 18.

Control unit 100 may be configured for activating the means 38, e.g. vacuum source 39, and for causing the sealing head 40 to receive and hold said one or more film sheets 18 in correspondence of the inner portion 37 of active surface 41. In particular, the control unit 100 may be configured for coordinating activation of the means 38, e.g. of vacuum source 39, with proper positioning of the cut film sheet 18 with respect to head 40: the proper positioning may be achive4d using a mobile the backing plate 16 displaceable between the cutting assembly 13 and the packaging assembly 8 or by moving the upper tool from a position in alignment with the lower tool to a position in alignment with a static backing plate located at the cutting assembly 13. For example, the control unit 100 may activate the means 38, e.g. vacuum source 39, and cause the sealing head 40 to receive and hold said one or more film sheets 18 in correspondence of the inner portion 37 of active surface 41, when the backing structure 16 carrying the cut film 18 is properly positioned within the packaging chamber underneath the holding plate 36. Heating means may be integrated in the sealing head 40 which may be configured to heat the inner portion 37 of active surface 41.

The control unit may control the heating means to generate a first temperature in the outer portion of active surface 41 (i.e. in a portion peripheral to the inner portion 37 of active surface 41) and a second temperature in the inner portion 37 of active surface 41. In particular, the control unit 100 may be configured to control the first and second temperatures as follows:
- in case of heat-shrinkable films 10 being used, then the control unit may only cause heating of the peripheral portion of the active surface 41, optionally only when this latter is pressed against the rim 4c of tray 4,
- in case of non heat-shrinkable films 10 being used, then the control unit may cause heating of the entire active surface 41 and thus of the entire film sheet with the first and second temperatures being e.g. equal,
- in case of skin packaging then the control unit may cause heating of the entire active surface 41 and thus of the entire film sheet, e.g. with the second temperature being higher than the first temperature.

Operation of the second embodiment takes place under control of control unit 100 and achieves a process of packaging a product in a tray. In this case, the described process allows a skin packaging of the product. In any case, apparatus 1 is also capable of packaging under modified atmosphere.

In the apparatus 1 of FIGs. 12-16, the transfer device has moved the cut film sheet 18 into the packaging chamber 24 and the sealing head 40 has received the cut film sheet (see FIG. 12).

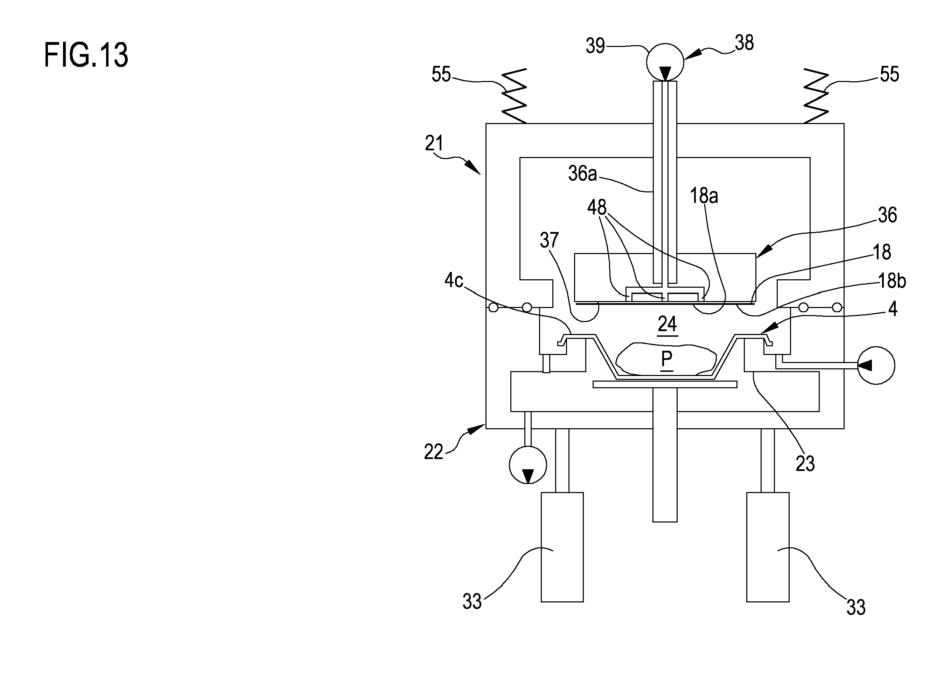

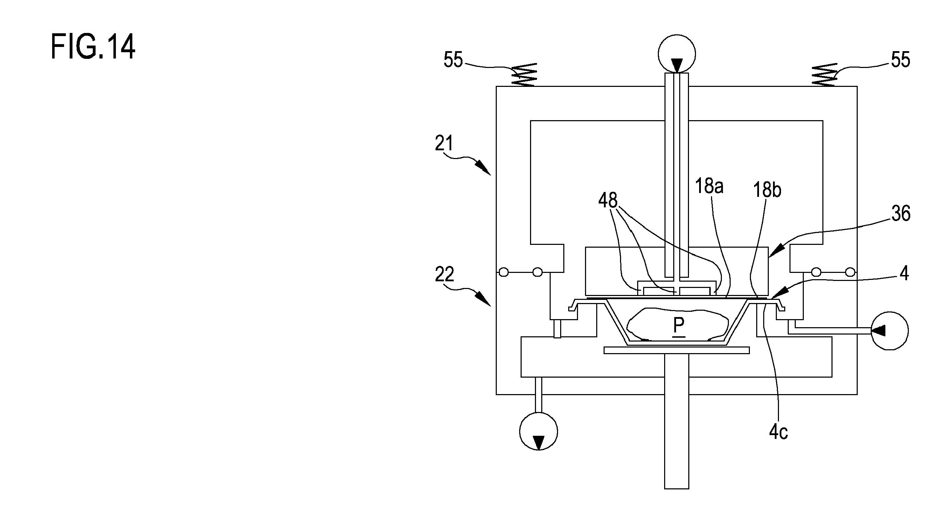

The control unit 100 controls the main actuator 33 to close the packaging chamber 24 (FIG. 13) by lifting the lower tool 22 such that inner wall 33 intercepts the tray 4. At this point, the packaging chamber is hermetically closed and film sheet 18 is held by sealing head 40 at a certain distance from the mouth of the tray 4. As shown in FIG. 13, the vacuum arrangement may be activated and a certain degree of vacuum is created. A further vertical movement imposed onto the lower tool 22 by main actuator 33 wins the reaction of the elastic elements 55 (see FIG. 14) and brings the film sheet hold by holding plate in contact to the rim 4c of the tray 4.

The sealing head 40 causes a heating of the film sheet 18 positioned above a tray 4. As the material of cut film sheet 18 is adequate for vacuum packaging, the active surface 41 is heated to a temperature allowing the desired subsequent deformation of the central portion 18a of the cut film sheet 18, which typically expands or stretches out and thereby adapts to the contours of the product present within tray 4. Then the control unit causes the pump 39 to pump gas into chamber 24 (e.g. instead of operating as a vacuum source) and thereby cause the draping down of the film sheet onto the product. Alternatively the control unit may simply connect the suction holes 48 to the environment (e.g. surrounding atmosphere) as is typically sufficient for establishing normal pressure within chamber 24. As the cut film sheet 18 is in tight contact with the rim 4c of tray 4 or tray 4 itself and has substantially adapted to the contours of the product present in tray 4, the remaining space between the cut film sheet 18 and the product and/or tray 4 still corresponds to the vacuum established before. Upon establishing normal pressure in chamber 24, the cut film sheet 18 is tightly pressed against the contours of the product and of the tray 4, such that a minimal amount of air or controlled gas remains within the package.

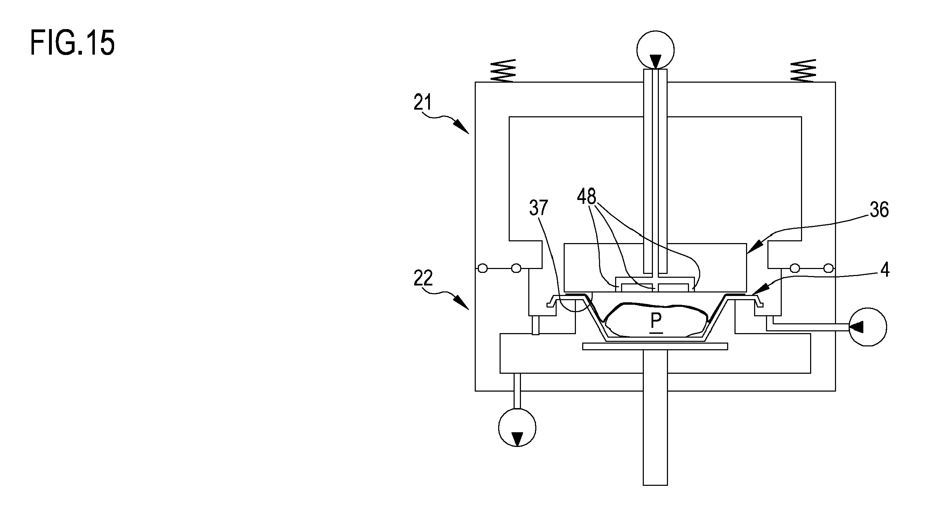

Further heating generated by the sealing head 40 may facilitate sealing of the peripheral portion of the film sheet to rim 4c (see FIG. 15). The control unit 100 operates the main actuator to lower the lower tool 22, and thus the packaging chamber 24 may be opened to allow the tray to proceed downstream the packaging assembly. The cycle may then be repeated.

It is noted that the cut film sheet 18 can either bond to tray 4 and rim 4c thereof by the heat treatment described above and/or by heat sealing the peripheral portion of cut film sheet 18 along the rim 4c of tray 4 as also described above.

### Control unit of apparatus 1

The apparatus according to the invention has of at least one control unit. The control unit 100 (schematically represented in FIG. 1) may comprise a digital processor (CPU) with memory (or memories), an analogical type circuit, or a combination of one or more digital processing units with one or more analogical processing circuits. In the present description and in the claims it is indicated that the control unit 100 is "configured" or "programmed" to execute certain steps. This may be achieved in practice by any means which allow configuring or programming the control unit. For example, in case of a control unit 100 comprising one or more CPUs, one or more programs are stored in an appropriate memory. The program or programs containing instructions which, when executed by the control unit, cause the control unit 100 to execute the steps described and/or claimed in connection with the control unit. Alternatively, if the control unit 100 is of an analogical type, then the circuitry of the control unit is designed to include circuitry configured, in use, to process electric signals such as to execute the control unit steps herein disclosed.

In general terms, the control unit 100 may act on and control the transport assembly 3, the film cutting assembly 6, the transfer device, packaging assembly 8 and particularly the upper and/or lower tools 21, 22, the vacuum arrangement 27, the controlled atmosphere arrangement 30, as well as any heating means. In particular the control unit 100 may be configured for controlling execution of the following cycle:
commanding the transport assembly 3 to displace said support along the predefined path into said packaging chamber 24 so that each tray 4 to be packaged is housed in the respective seat 23b;
commanding the film cutting assembly 6 to cut at least one film sheet 18 exactly sized to cover the upper opening of the tray 4 delimited by said rim 4c and at least part of or the entire top surface of the rim,
commanding the transfer device to position the cut film sheet 18 inside the packaging chamber 24 and above the respective tray 4,
commanding the upper tool 21 to hold the cut film sheet 18 above and at a distance from said tray 4,
commanding the packaging assembly 8 to pass from the first to the second operating condition so as to close the packaging chamber 24,
commanding the vacuum arrangement 27 (if present and necessary for the specific packaging cycle) to remove air from within said closed packaging chamber,
commanding the controlled atmosphere arrangement 30 (if present and necessary for the specific packaging cycle) to inject a gas or a gas mixture into the packaging chamber,
commanding the packaging assembly 8 to tightly fix the film sheet 18 to said tray 4,
commanding the packaging assembly 8 from the second to the first operating condition,
commanding the transport assembly 3 to move the tray 4 with the tightly fixed film sheet 18 out of the packaging chamber 24 and then repeating the above cycle.

The control unit may also be configured for controlling the apparatus 1 in order to execute any one of the packaging processes described below or claimed in the appended claims.

### Processes of packaging

Processes of packaging in accordance with aspects of the invention are now described.

The following processes may be executed by the apparatus according to any one of the above embodiments and variants under the supervision of control unit 100. In accordance with an aspect of the invention it is the control unit 100 which is controlled and programmed to execute the processes described below using an apparatus 1 as described in one of the above embodiments or as claimed in any one of the appended claims.

The trays (or supports) 4 are progressively moved to the packaging assembly 8, e.g. by transport assembly 3. At the same time the film 10a is unrolled from roll 10 and the cutting assembly 6 acting outside packaging chamber 24 prepares the cut film sheets 18 in number and size corresponding to the trays to be closed. In practice the film sheets may be cut to a shape and size largely corresponding to that of the outer border of the rim 4c (e.g. substantially identical in size or slightly larger than that of the outer border of rim 4c, and covering the opening of tray 4) or they may be cut to a size radially smaller than the outer edge of rim 4c but sufficiently large to tightly close the opening of tray 4 and to sealingly engage the top surface of rim 4c. In other words, the radial width of the cut film sheets may be comprised between the maximum radial width and the minimum radial width of the rim 4c of tray 4. In some examples, the cut film sheets can be somewhat larger than required to cover the entire rim 4c, thereby allowing for some excess material extending beyond the rim 4c. It is noted that in all the described alternatives, the resulting film sheet 18 comprises one or more corner flaps extending beyond the peripheral rim edge 4d of tray 4 as described further above.

The tray preparation may be done beforehand or the trays may be formed in-line at a forming station substantially at the same as the cutting of film sheets is performed. The cutting of the film 10a into film sheets 18 can take place at a station remote from the location where the film sheets are coupled to the tray. The cut film sheet or- in case a plurality of trays are treated at the same time - a plurality of cut film sheets are moved to the packaging assembly 8. The packaging assembly 8 is left open for a time period sufficiently long for a number of trays 4 and for a corresponding number of film sheets 18 to be properly positioned inside the packaging chamber 24 defined in the packaging assembly. Different means for transporting the film sheets 18 can be used, or alternatively the film sheets 18 can be picked up as described above. Then the packaging assembly 8 is closed and the film sheets are held above the respective tray at a distance sufficient to allow gas circulation inside the tray. The packaging chamber is hermetically closed in the sense that only controlled streams of gas may be withdrawn and/or injected into the chamber 24 under the control of apparatus 1 (e.g. controlled by control unit 100 thereof). At this point, the packaging process may vary depending upon the type of packaging and depending upon the type of film sheet available.

If, for example, a non heat shrinkable film sheet is being used as tray lid, and if it is intended to create a modified atmosphere packaging, then a partial vacuum is created inside the packaging chamber and a gas for modified atmosphere contemporaneously or subsequently injected. When a partial vacuum is formed in the packaging chamber 24 (e.g. by the control unit 100 controlling the vacuum pump 28 to withdraw gas from said packaging chamber 24) gas is withdrawn until a pressure comprised between 100 and 300 mbar, optionally between 150 and 250 mbar, is reached inside the packaging chamber 24. This pressure level is sufficiently low but not too low, so that detachment of the film sheet from the holding plate 36 is avoided. This can be achieved, for example, by ensuring that the pressure level formed in correspondence of the suction holes 48 is below the pressure level established in the packaging chamber. In this phase, the film sheet (or the film sheets) is kept in place by the holding plate, which may be provided with means for holding the film in proper position as described above. Then, after a prefixed delay from start of gas withdrawal (e.g. after a prefixed delay from activation of said vacuum pump 28) or after a prefixed level of vacuum has been reached inside said packaging chamber 24, a modified atmosphere gas in injected into the packaging chamber 24. The injecting of said stream of controlled gas for creating a modified atmosphere may be started even while gas withdrawal is still going on so as to shorten the time for creating the modified atmosphere. The risks involved with high oxygen content are the same as discussed above. Moreover as it is preferable to avoid having very strong vacuum in the packaging chamber and at the same time it is desirable to ensure a proper atmosphere inside the chamber it is advantageous stopping the vacuum generation after the gas injection has already started. In this way pressure inside the chamber never goes below a desired value. During the overlap, the gas injected is mixed with residual air and continuing to pull vacuum the mix air-modified atmosphere gas continues to be removed so that the amount of initial air is in any case decreased.

The film sheet 18 may be uniformly heated or it may be heated at least in correspondence of the peripheral portion 18b. This operation may take place using the sealing head 40 and/or the heating means associated to the holding plate 36. At least one of the peripheral portion 18b of cut film sheet 18 and of the rim 4c is brought to a temperature allowing the heat bonding of the peripheral portion 18b to the rim 4c of tray 4 and a tight closure of the tray 4. Thereafter, or contemporaneously to heating, the film sheet 18 is lowered and tightly bond to the tray. If ultrasonic or microwave-based heaters are used, they are operated at this stage and also the rim 4c of tray 4 may be contemporaneously heated. The specific shape of one or more corner regions 41e of the sealing head 40 allows for the formation of a seal extending circumferentially around the top rim 4c of tray 4. The seal 90 is shaped for instance as described above in connection with figures 6C, 6D, 6G, 6H, 6I, 6J, 6K, 6L. The seal 90 may have substantially a constant width except for sections of the seal in correspondence of the one or more corner regions 4e of tray 4, where the width varies and may for instance be smaller than the width far from the corner regions. As described above, the corner regions 41e of sealing head 40 can provide the seal with a varying width at the corner regions 4e of tray 4, thereby forming a corner flap as described above. The resulting corner flap (or flaps, if the sealing head 40 comprises more than one corner region as described) may comprises a first portion 93' that extends beyond the top rim 4c of tray 4. Further, the corner flap comprises a second portion 93" where the film 18 is not sealed to the top rim 4c of the tray 4 but where the film 18 overlaps the top rim 4c. Once the bonding has been completed, the packaging chamber may be opened and the tray 4 provided with a tight lid formed by the cut film sheet 18 may proceed out of the packaging chamber 24.

If, for example, a heat shrinkable film sheet is being used as tray lid, and if it is intended to create a modified atmosphere packaging, then a partial vacuum is created inside the packaging chamber and a gas for modified atmosphere contemporaneously or subsequently injected. When a partial vacuum is formed in the packaging chamber 24 (e.g. by the control unit 100 controlling the vacuum pump 28 to withdraw gas from said packaging chamber 24) gas is withdrawn until a pressure comprised between 100 and 300 mbar, optionally between 150 and 250 mbar, is reached inside the packaging chamber 24. This pressure level is sufficiently low but not too low, so that detachment of the film sheet from the holding plate 36 is avoided. This can be achieved, for example, by ensuring that the pressure level formed in correspondence of the suction holes 48 is below the pressure level established in the packaging chamber. In this phase the film sheet is kept by the holding plate, which may be provided with means for holding the film in proper position as described above. Heat shrinkable films may be very thin (e.g. the thickness may go down to a range of 15-40 micron, in some applications down to a range of 10-15 micron) and their handling after cutting is difficult so it is relevant that the pressure levels in the packaging chamber and at the holding plate are properly controlled. After a prefixed delay from the start of gas withdrawal (e.g. after a prefixed delay from activation of said vacuum pump 28) or after a prefixed level of vacuum has been reached inside said packaging chamber 24, a modified atmosphere gas is injected into the packaging chamber 24. The injecting of said stream of controlled gas for creating a modified atmosphere may be started even while gas withdrawal is still going on so as to shorten the time for creating the modified atmosphere. Moreover as it is preferable to avoid having very strong vacuum in the packaging chamber and at the same time it is desirable to ensure a proper atmosphere inside the chamber it is advantageous stopping the vacuum generation after the gas injection has already started. In this way pressure inside the chamber never goes below a desired value. During the overlap, the gas injected is mixed with residual air and, continuing to pull vacuum, the mix air-modified atmosphere gas continues to be removed so that the amount of initial air is in any case decreased. This flushing of gas and mixing of the gas and residual air is very important in order to achieve the desired controlled atmosphere in an effective and efficient manner, while ensuring that the desired pressure (i.e. level of vacuum) is achieved.

The film sheet 18 may be heated in correspondence of its periphery 18b. This operation may take place using the sealing head 40. At least one of the peripheral portion 18b of cut film sheet 18 and of the rim 4c is brought to a temperature allowing the heat bonding of the peripheral portion 18b to the rim 4c of tray 4 and a tight closure of the tray 4. Then the film sheet is lowered and tightly bond to the tray 4. In case ultrasonic or microwave-based heaters are used, they are operated at this stage and also the tray rim 4c may be contemporaneously heated. The seal 90 is shaped for instance as described above in connection with figures 6C, 6D, 6G, 6H, 6I, 6J, 6K, 6L. The seal 90 may have substantially a constant width except for sections of the seal in correspondence of the one or more corner regions 4e of tray 4, where the width varies and may for instance be smaller than the width far from the corner regions. As described above, the corner regions 41e of sealing head 40 can provide the seal with a varying width at the corner regions 4e of tray 4, thereby forming a corner flap as described above. The resulting corner flap (or flaps, if the sealing head 40 comprises more than one corner region as described) may comprise a first portion 93' that extends beyond the top rim 4c of tray 4. Further, the corner flap comprises a second portion 93" where the film 18 is not sealed to the top rim 4c of the tray 4 but where the film 18 overlaps the top rim 4c. Once the bonding has been completed, the packaging chamber may be opened and the tray 4 provided with a tight lid formed by the cut film sheet 18 may proceed out of the packaging chamber 24.

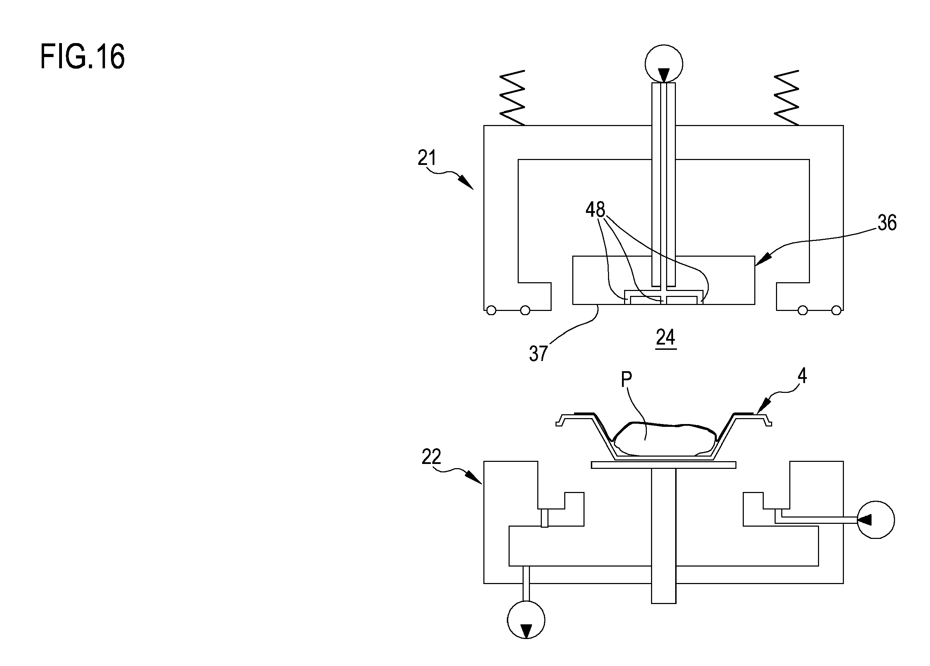

If, for example, a non-heat shrinkable film sheet is being used and if it is intended to create a vacuum skin packaging, then a vacuum is created inside the packaging chamber. Then, the film sheet 18 may be uniformly heated or it may be heated at least in correspondence of its periphery 18b to a first temperature adequate for heat sealing and it may be heated in correspondence of its central portion 18a to a second temperature, e.g. equal to or above the first temperature, adequate for rendering the film sheet deformable. This operation may take place using the sealing head 40 and/or the heating means associated to the holding plate 36. Then, once a vacuum level adequate for skin packaging has been reached, the film sheet is lowered such that the peripheral portion 18b of the film sheet 18 contacts the rim 4c of the tray 4. In case ultrasonic or microwave-based heaters are used, they are operated at this stage and also the rim 4c of tray 4 may be contemporaneously heated. In general, the heating of the film 18 or of the peripheral portion 18b thereof preferably takes place at the same time as the film is moved towards (i.e. is approached to) and contacts the tray 4 or the rim 4c thereof. The holding plate 36 releases the film sheet and normal atmosphere pressure is created above the cut film sheet 18 which drapes down and matches the shape of the product P and of the inside walls of the tray crating a plastic film skin around the product and on the surfaces of the tray 4 that are not occupied by product P. In other words, when a predefined low pressure is reached within packaging chamber 24 and thus within the tray 4 underneath the film sheet 18, the film sheet 18 is released and is drawn downwardly by the vacuum within the tray 4. Since the film sheet 4 is heated (and softened), under effect of the vacuum within the tray 4 it deforms so as to adhere to the product P and to the inner surface of the tray 4 (see FIGs. 15 and 16). In practice the film is at least bonded to the rim 4c and to portions of the inner surface of the tray 4. The seal 90 is shaped for instance as described above in connection with figures 6C, 6D, 6G, 6H, 6I, 6J, 6K, 6L. The seal 90 may have substantially a constant width except for sections of the seal in correspondence of the one or more corner regions 4e of tray 4, where the width varies and may for instance be smaller than the width far from the corner regions. As described above, the corner regions 41 e of sealing head 40 can provide the seal with a varying width at the corner regions 4e of tray 4, thereby forming a corner flap as described above. The resulting corner flap (or flaps, if the sealing head 40 comprises more than one corner region as described) may comprise a first portion 93' that extends beyond the top rim 4c of tray 4. Further, the corner flap comprises a second portion 93" where the film 18 is not sealed to the top rim 4c of the tray 4 but where the film 18 overlaps the top rim 4c. Once the bonding has been completed, the packaging chamber may be opened and the tray 4 provided with a tightly associate skin formed by cut film sheet 18 may move out of the packaging chamber 24.

For example, the amount of gas or air ejected can be minimized so as to achieve, depending upon the material and properties of the film used, the effect of positioning the peripheral 18b and/or corner portions 18e of cut film sheet 18, while not substantially (or, at least, very slowly) altering the pressure and/or composition of the atmosphere within chamber 24.

Alternatively, the creation of a vacuum inside chamber 24 may be skipped and the cut film sheet 18 can be bonded to the tray 4 creating a sealed tray with ambient atmosphere inside the package.

While the invention has been described in connection with what is presently considered to be the most practical and preferred embodiments, it is to be understood that the invention is not to be limited to the disclosed embodiments, but on the contrary, is intended to cover various modifications and equivalent arrangements included within the spirit and the scope of the appended claims. For example, the elastic elements 55, 60, and 80 may be substituted by linear actuators controlled by control unit 100.

The specific nature of the actuators described is exemplary and alternative types of actuators may be used provided the type of motion imposed to the mobile parts on which said actuators are operating is substantially the same.

It is also notes that although the described embodiments show a single packaging assembly 8, multiple packaging assemblies may be used in parallel, in order to optimize productivity.

## Claims

1. A package with a product (P), comprising:
a tray (4) hosting the product (P), the tray (4) having a base wall (4a), a side wall (4b) emerging from the base wall (4a), and a top rim (4c) radially emerging from the side wall (4b), the top rim (4c) delimiting a mouth of the tray (4) and outwardly terminating at a peripheral rim edge (4d), the tray (4) having at least one tray corner region (4e); and
a plastic film sheet (18), comprising heat sealable material, having a peripheral portion (18b) and a peripheral border (18d), the film sheet (18) being heat bonded to the tray top rim (4c) at least by a seal (90) circumferentially extending between the peripheral portion (18b) and the top rim (4c) of the tray (4), thereby sealing an inside of the package from an outside thereof, the seal (90) having an outward edge (91); **characterized in that**, in correspondence of the at least one tray corner region (4e), the outward edge (91) of the seal (90) forms at least one welding line (92) having shape different from the shape of the peripheral rim edge (4d) at the same corner region (4e) and delimits - in cooperation with the peripheral portion (18b) of the film sheet (18) - at least one portion of a film sheet corner flap (93), said at least one portion of the corner flap (93) overlapping said top rim (4c) and not being heat sealed to the same top rim.

2. The package of claim 1, wherein said seal (90) comprises plastic material of the film peripheral portion (18b) and/or of the tray top rim (4c) and wherein the at least one welding line (92) is configured and positioned such as to stiffen and/or keep flat said film flap (93).

3. The package of any one of the preceding two claims wherein at least one welding line (92) has a concavity facing the corner flap (93) and defines at least two wedge shaped portions (94) of the seal each wedge shaped portion having a vertex of an angle of less than 135°.

4. The package of any one of the preceding claims 1 or 2 wherein said at least one welding line (92) has a concavity facing away from the corner flap (93) and defines at least one wedge shaped portion (94) of the seal (90) having a vertex of an angle of more than 135°.

5. The package of any one the preceding claims wherein the at least one welding line (92) is a polygonal line formed by a plurality of welding lines or a curvilinear welding line or a single straight welding line.

6. The package of claim 5 in combination with one of claims 3 and 4, wherein:
a. the at least one welding line (92) is a polygonal, formed by at least two welding lines, and has concavity facing the corner flap (93), with the two wedge shaped portions (94) pointing towards opposite sides of the corner flap and symmetrically positioned with respect to a line bisecting a tip angle (α) of the corner flap; or
b. the at least one welding line (92) is a polygonal, formed by at least two welding lines, with concavity facing away from the corner flap (93) and with one wedge shaped portion (94) pointing towards the center of the corner flap and symmetrically positioned with respect to a line bisecting a tip angle (α) of the corner flap; or
c. the at least one welding line (92) is a curvilinear welding line with concavity facing the corner flap (93) with the two wedge shaped portions (94) pointing towards opposite sides of the corner flap and symmetrically positioned with respect to a line bisecting a tip angle (α) of the corner flap.

7. The package of any one of the preceding claims, wherein the seal (90) has a first width (W1) along a majority of the peripheral portion (18b) of the film sheet (18) and a second width (W2) in correspondence of the at least one tray corner region (4e), the second width being less than the first width.

8. The package of any one of the preceding claims wherein the peripheral border (18d) of the film sheet (18) radially protrudes outside the peripheral rim edge (4d) of the tray (4), such that, in correspondence of the at least one tray corner region (4e), the corner flap (93) which is not connected to the top rim (4c) presents a first flap portion (93') extending outside the peripheral rim edge (4d) of the at least one tray (4) and a second flap portion (93") extending inside the peripheral rim edge (4d) of the at least one tray (4) and overlapping said top rim (4c) of the at least one tray (4).

9. The package of any one of the preceding two claims, wherein the tray is rectangular, the first width (W1) of the seal (90) being substantially constant along the parallel straight sides of the tray, and the second width being substantially variable along the tray corner region (4e), optionally wherein a minimum of the second width (W2) is less than 50% of the first width,
further wherein a size of the second flap portion (93e") is equal to 50% the size or greater than a size of the first flap portion (93e'), optionally wherein the size of the second flap portion (93e") is at least 200% of the size of the first flap portion (93e'), further optionally wherein the size of the second flap portion (93e") is at least 300% of the size of the first flap portion (93e').

10. The package of any one of the preceding claims, wherein
the seal comprises, in correspondence of the at least one tray corner region (4e), an auxiliary seal section exhibiting no direct connection to the rest of seal, wherein the auxiliary seal section is configured to seal at least part of the corner flap, in particular part of the second corner flap portion (93e") of the corner flap, to the top rim (4c) of the tray (4), or
wherein the seal comprises, in correspondence of the at least one tray corner region (4e), an auxiliary seal section having the shape of a narrow strip extending transversally to the rest of the seal (90), wherein the auxiliary seal section is configured to seal a central portion of the corner flap, in particular of the second corner flap portion (93e") of the corner flap (93), to the top rim (4c) of the tray (4).

11. The package of any one of the preceding claims, wherein the seal (90) has a substantially constant width except for one or more non-constant width sections of the seal in correspondence of the at least one tray corner region (4e), the seal (90) comprises a continuous layer and extends substantially within a single plane, the film (18) is a discrete film sheet which has a size sufficient to cover the mouth of the tray (4) and to engage the top rim (4c) of the tray (4) in correspondence of an entire perimeter of the tray (4); optionally the film sheet (18) not extending beyond the peripheral rim edge (4d) of the tray (4) except for a portion of the film in correspondence of the tray corner region (4e) when the film sheet (18) is placed substantially in superimposition with the tray (4).

12. The package of any one of the preceding claims, wherein the package is a vacuum skin package wherein the film sheet (18) is at least heat bonded to an inner side of a side wall (4b) of the tray (4), and optionally to an inner side of a bottom wall (4a) of the tray (4) not interested by the product (P).

13. A packaging assembly (8) for a packaging apparatus, comprising:
a lower tool (22) having at least one seat configured for receiving at least one tray (4) configured for hosting a product (P), the at least one tray (4) having a base wall (4a), a side wall (4b) emerging from the base wall (4a), and a top rim (4c) radially emerging from the side wall (4b), the top rim (4c) delimiting a mouth of the tray (4) and outwardly terminating at a peripheral rim edge (4d), the at least one tray (4) further having at least a tray corner region (4e);
an upper tool (21) configured to cooperate with the lower tool (22) to define a packaging chamber (24), the upper tool (21) being further configured for holding at least a portion of a plastic film sheet (18) having a peripheral border (18d),
wherein the upper tool (21) comprises a sealing head (40) having an active surface (41) radially delimited, at a radially external periphery thereof, by a head peripheral edge (41a), the active surface (41) being configured for facing the top rim (4c) of the at least one tray (4) and for heat sealing the film sheet (18) to the top rim (4c) of the tray (4);
wherein at least one of the upper and lower tools (21; 22) is configured to be movable with respect to the other at least between a first operating condition, where the upper and lower tools (21, 22) allow for positioning of the at least one tray (4) in the at least one seat (23b) and where said packaging chamber (24) is open to receive the film (18), and a second operating condition, where the upper and lower tools (21; 22) are configured to bring the film (18) into contact with the top rim (4c) of the at least one tray (4);
wherein - when the upper and lower tools are in the second operating condition - the sealing head (40) is configured to heat seal at least a peripheral portion (18b) of the film sheet (18) to the top rim (4c) of the tray (4), thereby creating a seal (90) extending along and around the top rim (4c), the seal (90) having an outward edge (91); **characterized in that**
the sealing head (40) comprises at least one head corner region (41e) defining a corner portion of the head peripheral edge (41a), which - when the upper and lower tools are in the second operating condition and the film peripheral portion (18b) contacts the top rim (4c) - is positioned and configured to delimit, in cooperation with the peripheral border (18d) of the film (18), at least one portion of a film corner flap (93) overlapping said top rim (4c) such that said at least one portion of the film corner flap (93) is not heat sealed by the sealing head to the top rim.

14. The packaging assembly of the preceding claim wherein said corner portion of the head peripheral edge (41a) presents a shape different from the shape of the corner region (4e) of the peripheral rim edge (4d), said corner portion of the head peripheral edge (41a) being one in the group of a polygonal line or a curvilinear line, and wherein alternatively:
- said corner portion of the head peripheral edge (41a) has a concavity directed to an outside of the head (40) and defines at least two wedge shaped portions each having a vertex of an angle of less than 135°, or
- said corner portion of the head peripheral edge (41a) has a concavity facing to an inside of the head (40) and defines at least one wedge shaped portion (94) having a vertex of an angle of more than 135°.

15. The packaging assembly of any one of the preceding four claims, wherein the head peripheral edge (41a) has a first width along a majority of the head peripheral edge and a second width in correspondence of the at least one head corner region (41e), wherein the second width is less than the first width;
wherein the first width is substantially constant and wherein the second width of the head peripheral edge (41a) is variable along the head corner region (41e), optionally wherein a minimum of the second width is less than 50% of the first width.

16. The packaging assembly (8) of any one of the preceding three claims, further comprising:
a film cutting assembly (6) active on a continuous film (10a) and configured for cutting sheets of prefixed length from said continuous film (10a), thereby providing the film sheet (18) in the form of a sheet having a size sufficient to cover the mouth of the tray (4) and to engage the top rim (4c) of the tray (4) in correspondence of an entire perimeter of the tray (4); optionally each film sheet cut from said continuous film (10a) being sized such that it does not extend beyond the peripheral rim edge (4d) of the tray (4) except for a portion of the film in correspondence of the tray corner region (4e), when the cut film sheet is placed in superimposition with the respective tray (4);
wherein the upper and lower tools, when in the second operating condition, are configured to position the at least one tray (4) with the peripheral rim edge (4d) radially extending beyond the corner portion of the head peripheral edge (41a) of said active surface (41).

17. The packaging assembly (8) of the preceding claim, wherein - when the upper and lower tools are in the second operating condition - the sealing head (40) is configured to seal the film sheet (18) to the top rim of the tray, with the peripheral border (18d) of the film sheet (18) radially protruding at said at least one head corner region (41e) outside the corner portion of the head peripheral edge (41a) of the active surface (41) and beyond the peripheral rim edge (4d) of the at least one tray (4), further wherein the sealing head is configured for heat sealing of the film (18) to the top rim (4c) and for forming, in correspondence of said tray corner region (4e) said seal (90) delimiting said corner flap (93) which is not sealed to the top rim (4c) of the at least one tray (4) and which presents a first flap portion (93') extending outside the peripheral rim edge (4d) of the at least one tray (4) and a second flap portion (93") extending inside the peripheral rim edge (4d) of the at least one tray (4), optionally wherein a size of the second flap portion (93") is at least 50% or equal to or greater than a size of the first flap portion (93'), more optionally wherein the size of the second flap portion (93") is at least 200% of the size of the first flap portion (93'), further optionally wherein the size of the second flap portion (93") is at least 300% of the size of the first flap portion (93').

18. The packaging assembly (8) of any one of the preceding five claims, wherein
the head peripheral edge (41 a) at the head corner region (41 e) comprises a corner projection extending outwardly from a projection base point of the head peripheral edge (41a) located at the head corner region (41e), optionally wherein the corner projection extends from the head peripheral edge (41a) substantially perpendicularly with respect to a tangent of the head peripheral edge (41a) at the projection base point,
wherein the active surface (41) further comprises at the head corner region (41e) an auxiliary active surface (41x) extending co-planar to the active surface (41), the auxiliary active surface (41x) exhibiting no direct connection to the active surface (41) within a common plane of the active surface (41) and the auxiliary active surface (41x), and wherein the auxiliary active surface is configured to seal at least part of flap portion of the corner flap (93) to the top rim (4c) of the tray (4).

19. An apparatus (1) for packaging a product (P), comprising:
a packaging assembly (8) of any one of claims 13 to 18, the apparatus further comprising:
a film supplying assembly (5) configured for supplying a continuous film (10a);
a film cutting assembly (6) active on the continuous film (10a) and configured for cutting film sheets (18) of prefixed length from said continuous film (10a), and
a control unit (100) connected to the packaging assembly (8) and at least configured for commanding the packaging assembly (8) to pass from the first to the second operating condition and vice-versa, and
to control the sealing head (40) and the film cutting assembly (6) such that said continuous film is cut into film sheets (18) having a size sufficient to cover the mouth of the tray (4) and the sealing head (40) seals each film sheet (18) to the top rim of the respective tray (4) along said seal (90) with at least one portion of the film sheet corner flap (93) overlapping said top rim (4c) remaining not heat sealed to the top rim.

20. A process of making a package with a product (P), the package being of the type according to any one of claims 1 to 12, the process comprising the steps of:
providing the tray (4) configured for hosting the product (P);
providing the film sheet (18) having said peripheral portion (18b) and peripheral border (18d);
applying the film sheet (18) to the tray (4) by heat bonding at least part of the peripheral portion (18b) to at least part of the top rim (4c) of the tray (4) in order to create said seal (90) extending all around the peripheral portion (18b) and the top rim (4c), the seal being obtained by softening and/or melting material of the peripheral portion (18b) and/or of the tray top rim (4c) and thereby welding the peripheral portion (18b) to said top rim (4c).

21. The process of claim 20, wherein the step of providing a film sheet (18) comprises the sub-steps of:
unrolling a film (10a) from roll (10), and
transversely cutting the unrolled portion of film (10a), thereby preparing the film sheet (18), wherein the film sheet (18) has a size sufficient to cover the mouth of the tray (4) and to engage the top rim (4c) of the tray (4) in correspondence of an entire perimeter of the tray (4); optionally the film (18) not extending beyond the peripheral rim edge (4d) of the tray (4) except for a portion of the film in correspondence of the tray corner region (4e) when the film sheet (18) is placed substantially in superimposition with the tray (4), further optionally wherein the cutting of the film (10a) takes place outside the packaging chamber (24) at a station remote from the location where the film sheets are coupled to the trays,
and wherein, while creating the seal (90) by heat bonding, the at least one portion of the corner flap (93) overlapping said top rim (4c) is defined such that said at least one portion of the corner flap is not heat sealed to the top rim (4c).

22. The process of the preceding two claims using the apparatus of claim 19 or using the packaging assembly of any one of claims 13 to 18, further comprising the steps of;
positioning the film sheet (18) into the packaging chamber (24) of the packaging assembly (8) and holding the film sheet with a film holder (36) arranged within the packaging chamber (24),
moving a tray (4) into the packaging chamber (24) and below the film holder (36), with the film sheet (18) substantially in superimposition of the respective tray (4),
hermetically closing the packaging chamber (24) with the cut film sheet (18) held above the tray (4), optionally the film sheet (18) being held at a distance sufficient to allow gas circulation inside the tray (4), moving the tray (4) and/or the film sheet (18) such that the top rim (4c) is brought into contact with the film sheet (18) peripheral portion (18b),
heat sealing the film sheet (18) peripheral portion (18b) to the tray (4) top rim (4c),
opening the hermetically closed packaging chamber (24), and
moving the tray (4) having the film sheet (18) sealedly fixed thereto out of the packaging chamber (24).
